# EUROPEAN PATENT SPECIFICATION

(11) **EP 1 974 884 B1**
(45) Date of publication and mention of the grant of the patent: **24.10.2012**
(21) Application number: 07022286.4
(22) Date of filing: 16.11.2007
(51) Int. Cl.: B28B 11/24, F26B 25/18, F27D 5/00, C04B 38/00

(54) **Method for manufacturing honeycomb structured body**
Verfahren zur Herstellung eines wabenförmigen Körpers
Procédé de fabrication d'un élément structuré en nid d'abeille

(30) Priority: 30.03.2007 WO PCT/JP2007/057277
(43) Date of publication of application: 01.10.2008
(73) Proprietor: Ibiden Co., Ltd., Ogaki-shi Gifu 503-8604 (JP)
(72) Inventor: Higuchi, Koji, Ibi-gun Gifu 501-0695 (JP)
(74) Representative: HOFFMANN EITLE

(56) References cited:
- EP-A- 1 825 979
- JP-A- 2007 010 235
- US-A1- 2006 043 652

## Description

### TECHNICAL FIELD

The present invention relates to a method for manufacturing a honeycomb structured body.

### BACKGROUND ART

In recent years, particulates such as soot in exhaust gases discharged from internal combustion engines of vehicles such as buses and trucks, and construction machines have raised serious problems as contaminants harmful to the environment and the human body.
For this reason, various particulate filters, which use a honeycomb structured body made of a porous ceramic, have been proposed as filters that collect particulates in exhaust gases and purify the exhaust gases. In addition, there is also known a honeycomb structured body that converts nitrogen oxide and the like in the exhaust gases by contacting a supported catalyst with the exhaust gases.

As a honeycomb structured body of this kind, there is employed a round pillar-shaped honeycomb structured body having a plurality of rectangular pillar-shaped honeycomb fired bodies bonded together by interposing a sealing material layer (adhesive layer) to be manufactured by carrying out extrusion-molding, degreasing, firing treatments, and the like on a mixture comprising a ceramic material such as silicon carbide.

A honeycomb fired body can be manufactured by using, for example, the following method.
First, a raw material composition is prepared by mixing a ceramic material such as silicon carbide, a binder, a dispersant solution and the like, and after this raw material composition has been continuously extrusion-molded, a molded body thus extruded is cut into a predetermined length so that a rectangular pillar-shaped honeycomb molded body is manufactured.
Next, the obtained honeycomb molded body is dried by using a microwave drying apparatus or a hot-air drying apparatus; then, after predetermined cells have been sealed so that either one of the ends of each cell has been sealed, the honeycomb molded body undergoes a degreasing treatment.
Lastly, a firing treatment is carried out on the honeycomb molded body. Thus, a honeycomb fired body can be manufactured through the processes.

The firing treatment among the above-mentioned processes refers to a treatment for manufacturing a honeycomb fired body by heating at a high temperature a honeycomb molded body, which is manufactured through extrusion-molding, and in which an organic matter is removed through the degreasing treatment, and by sintering ceramic powder. In the firing treatment, firing was carried out with the honeycomb molded body placed on a bottom plate of a firing jig made of carbon.
However, since the honeycomb molded body made of silicon carbide as a ceramic material contains about 3% of SiO₂ in a silicon carbide powder resulting from the manufacturing conditions, there occurred a case where in the firing treatment, SiO₂ was sublimated and discharged, a portion thereof became SiO gas, the reaction proceeded in which the SiO gas reacted with the carbon forming the firing jig to generate SiC, and coarse particles of silicon carbide was formed on the bottom plate of the firing jig.
The firing jig is a member designed for repetitive use. There has been a problem that when placing the honeycomb molded body on the bottom plate of the firing jig with coarse particles of silicon carbide formed thereon and carrying out a firing treatment on the honeycomb molded body, the surface of the honeycomb molded body is susceptible to damage, and pinholes and cracks occurred in the obtained honeycomb fired body, likely leading to strength reduction of the honeycomb fired body.
Furthermore, there has also been a problem that formation of the coarse particles of silicon carbide makes it difficult to use a firing jig repeatedly.

Patent Documents 1 and 2 disclose a method for firing a silicon carbide molded body (honeycomb molded body) in which firing is carried out with a space provided between a bottom plate of a firing jig and the silicon carbide molded body.

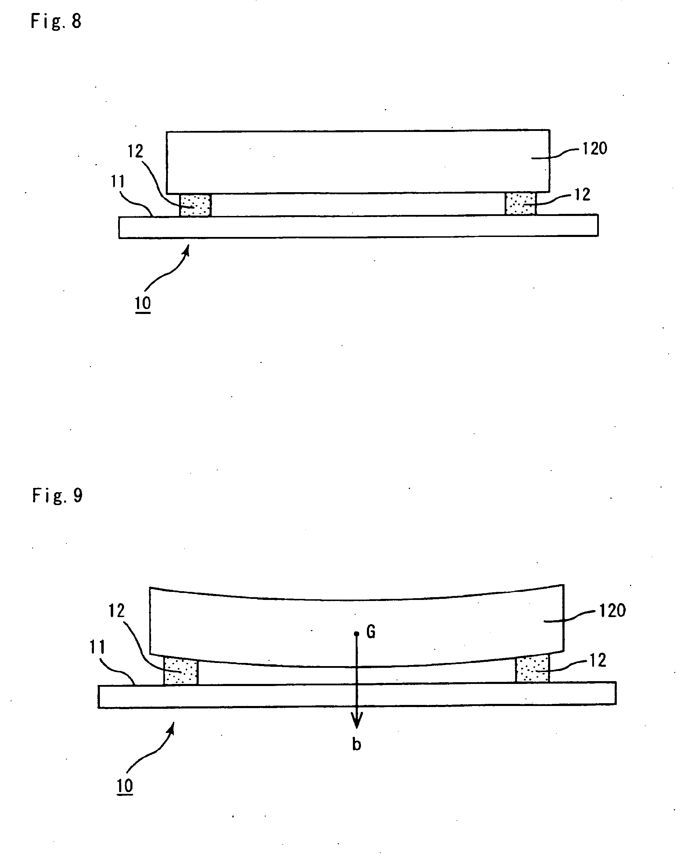

Fig. 8 is a cross-sectional view schematically showing a method for disposing spacers on a surface of a firing jig, placing a honeycomb molded body on the spacers, and carrying out a firing treatment thereon.

In Patent Document 1, as shown in Fig. 8, spacers 12 made of a ceramic material such as carbon are disposed on a bottom plate 11 of a firing jig 10, and a honeycomb molded body 120 is placed on the spacers 12, and the firing treatment is carried out with a space having the same thickness as the thickness of each of the spacers 12 is provided between the bottom plate 11 of the firing jig 10 and the honeycomb molded body 120.

According to Patent Document 1, it is estimated that carrying out the firing treatment with a space provided between the bottom plate 11 of the firing jig 10 and the honeycomb molded body 120 enables prevention of formation of coarse particles of silicon carbide on the bottom plate 11 of the firing jig 10 and prevention of occurrence of cracks and pinholes in a honeycomb fired body to be manufactured.

Patent Document 2 discloses a firing jig having a protruding portion. Placement of a silicon carbide molded body (honeycomb molded body) on the protruding portion of the firing jig enables a space having the same thickness as the thickness of the protruding portion to be provided between a bottom plate of the firing jig and the honeycomb molded body.
Therefore, it is also estimated that carrying out a firing treatment by using the firing jig disclosed in Patent Document 2 enables prevention of formation of coarse particles of silicon carbide on the bottom plate of the firing jig and prevention of occurrence of cracks and pinholes in the honeycomb molded body.

JP-A-2007 010235 discloses a manufacturing method according to the preamble of claim 1 with a jig that can be used for carrying out a heat treatment of a large molded ceramic body. The jig includes a frame member and plate members which are bridged across plural portions of the frame member and suitable for placing a body to be heat treated thereon.

EP-A-1 825 979 discloses a manufacturing method of a honeycomb structured body including a step of firing a honeycomb molded body to produce a honeycomb fired body. In the firing step, the honeycomb molded body is placed in a firing jig equipped with elongate spacing members. The spacing members are fixed in parallel in the firing jig and provided so as to support the honeycomb molded body at two positions.

Patent Document 1: JP-A 2001-220240
Patent Document 2: JP-A 2001-72472

### DISCLOSURE OF THE INVENTION

### PROBLEMS TO BE SOLVED BY THE INVENTION

However, as shown in Fig. 8, in the case where a firing treatment is carried out with a space provided between the honeycomb molded body and the bottom plate of the firing jig, warpage sometimes occurred in the manufactured honeycomb fired body.

Fig. 9 is a cross-sectional view schematically showing a way in which the vicinity of a center of gravity of a honeycomb molded body placed on spacers sinks and warps.
In the case where a firing treatment was carried out with a honeycomb molded body 120 being placed on spacers 12 disposed on a bottom plate 11 of a firing jig 10, as shown in Fig. 9, warpage sometimes occurred in a direction (a direction shown by an arrow b in Fig. 9) in which the vicinity of the center of gravity G of the honeycomb molded body 120 sank, and warpage sometimes occurred in a honeycomb fired body manufactured by firing the honeycomb molded body in the state.
In particular, in the case where a length in a longitudinal direction of the honeycomb molded body was 330 mm (13 inches) or more, warpage frequently occurred in the direction in which the vicinity of the center of gravity G of the honeycomb molded body sank.

And upon manufacturing a honeycomb structured body formed by bonding a plurality of honeycomb fired bodies each having warpage, the honeycomb fired bodies sometimes contacted one another and cracked in bonding, leading to difficulty in manufacturing the honeycomb structured body.

The present invention has been made to solve these problems, and it is an object of the present invention to provide a method for manufacturing a honeycomb structured body in which it is possible to manufacture a honeycomb fired body while preventing occurrence of warpage in honeycomb fired bodies in a firing treatment.

### MEANS FOR SOLVING THE PROBLEMS

The present inventors have examined a firing method in which it is possible to prevent warpage from occurring in honeycomb fired bodies to manufacture a honeycomb structured body.
First, the present inventors have examined the reason for occurrence of warpage in a direction in which the vicinity of a center of gravity of a honeycomb molded body sinks, and have expected that warpage occurs because force is applied in a direction in which the honeycomb molded body sinks to the center of gravity thereof due to its own weight.
Thus, the present inventors have tried to prevent occurrence of warpage resulting from sinking of the vicinity of the center of gravity of the honeycomb molded body in the firing treatment, by disposing a spacer also just under the honeycomb molded body in addition to two spacers shown in Fig. 9.

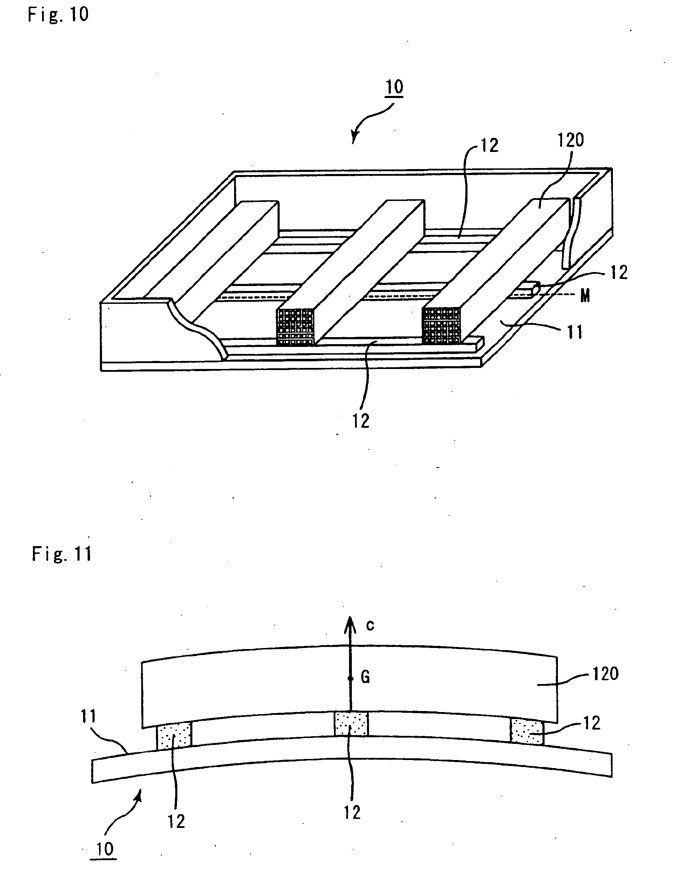

Fig. 10 is a partially cut-out perspective view schematically showing one example of a method for disposing a spacer just under a center of gravity of each of honeycomb molded bodies in a firing treatment and placing the honeycomb molded bodies in a firing jig.
Here, in Fig. 10, a portion of a side wall member of the firing jig is omitted so that it may be easier to seize the placement state of the honeycomb molded bodies.

Normally, the shape of a firing jig 10 is designed to give a length of one side of the bottom plate of the firing jig 10 slightly larger than a longitudinal length of a honeycomb molded body 120 to be placed.
Accordingly, as shown in Fig. 10, in the case where a plurality of the honeycomb molded bodies 120 are placed on spacers 12 that have been disposed on the firing jig 10 so that the honeycomb molded bodies 120 are in parallel with one another in a longitudinal direction thereof, centers of gravity of the honeycomb molded bodies 120 are located on the vicinity of a center line M of the bottom plate 11 of the firing jig 10.

The present inventors prevented occurrence of warpage in a direction in which the vicinity of the center of gravity of the honeycomb molded body sinks, by carrying out a firing treatment with the honeycomb molded bodies 120 placed on three spacers 12. However, by contraries, in some of the honeycomb fired bodies manufactured by carrying out the firing treatment according to the method, warpage occurred in a direction in which the vicinity of the center of gravity was lifted up.
The honeycomb fired bodies in which warpage occurred are not appropriate for manufacturing a honeycomb structured body, there remained a problem that the vicinity of the center of gravity was lifted up.

For this reason, the present inventors have examined the reason for occurrence of warpage in the direction in which the vicinity of the center of gravity is lifted up. And it has become apparent that the bottom plate of the firing jig may be lifted up in a dome shape with the vicinity of the center of the bottom plate of the firing jig being at the top of the dome shape.

Fig. 11 is a cross-sectional view schematically showing a way in which the vicinity of a center of gravity of a honeycomb molded body placed on spacers is lifted up and warps.
As shown in Fig. 11, in the case where warpage occurs in the direction in which the vicinity of the center of a bottom plate 11 of a firing jig 10 is lifted up, force is applied also to a central spacer disposed along a center line of the bottom face of the firing jig 10, in the direction in which the spacer is lifted up.
This has implied the presumption that an upward force (shown by an arrow c in Fig. 11) to just under the center of gravity G of the honeycomb molded body 120, and has given the expectation that the upward force causes occurrence of warpage in the direction in which the vicinity of a center of gravity G of the honeycomb molded body 120 is lifted up.

As thus described, the present inventors have made extensive research efforts on the reason for occurrence of warpage in honeycomb fired bodies manufactured by conventionally known methods, and have found that warpage of a firing jig also causes warpage of a honeycomb fired body, leading to completion of the present invention as a result of further research efforts based on the finding.

That is, a method for manufacturing a honeycomb structured body according to the features of claim 1.

In addition, according to the invention in accordance with claim 1, the spacers are disposed on at least two locations so as to sandwich a center of gravity of the honeycomb molded body in a longitudinal direction in the firing treatment.
In the case where the spacers are disposed in such a manner, since the spacers are not disposed in the vicinity of the center line of the bottom plate of the firing jig, that is, just under the center of gravity of the honeycomb molded body. Thus, less force is applied in a direction in which the honeycomb molded body is lifted up by interposing the spacers even in the case where the vicinity of the center of the bottom plate of the firing jig is lifted up. Therefore, it is possible to reduce warpage that will occur in a honeycomb fired body along a direction in which the bottom plate of the firing jig warps.
Accordingly, it is possible to manufacture a honeycomb fired body with small warpage even upon repetitive use of the firing jig.

In addition, in the firing treatment, when the honeycomb molded body is viewed in a plan view, the spacer is disposed with respect to each of middle points between the center of gravity of the honeycomb molded body and centers of gravity of each of end faces of the honeycomb molded body so as to include both an area on a side of the center of gravity of the honeycomb molded body and an area on a side of each of the end faces, upon each of the middle points being used as reference standard, provided that each of the end faces is an end face in a longitudinal direction of the honeycomb molded body.

In the firing treatment, force is applied so that the honeycomb molded body will warp in the direction in which the honeycomb molded body sinks to the vicinity of the center of gravity thereof due to its own weight. The fulcrum of the force is presumably a side of the spacers closest to the center of gravity of the honeycomb molded body. Therefore, in the case where the spacers are disposed on locations specified in the present invention, since a distance between the fulcrum of the force and the center of gravity of the honeycomb molded body is shorter than a distance between the middle point and the center of gravity of the honeycomb molded body, it is possible to reduce the force to be applied to the vicinity of the center of gravity of the honeycomb molded body.
In addition, force is applied also to the vicinity of each of the end faces of the honeycomb molded body so that the honeycomb molded body will warp in the direction in which the honeycomb molded body sinks due to its own weight. The fulcrum of the force is presumably a side of the spacers closest to each of the end faces of the honeycomb molded body. Therefore, in the case where the spacers are disposed on locations specified in the present invention, since a distance between the fulcrum of the force and each of the end faces of the honeycomb molded body is made shorter than a distance between the middle point and each of the end faces of the honeycomb molded body, it is possible to reduce the force to be applied to the vicinity of each of the end faces of the honeycomb molded body.
As thus described, since it is possible to reduce the force to be applied on both the vicinity of the center of gravity and the vicinity of each of the end faces, it is possible to manufacture a honeycomb fired body with small warpage.

And in the method for manufacturing a honeycomb structured body according to claim 1, since it is possible to manufacture a honeycomb fired body with smaller warpage in the firing treatment, upon bonding a plurality of honeycomb fired bodies together to manufacture a honeycomb structured body, the honeycomb fired bodies do not contact each other or cause cracks. Accordingly, it is possible to manufacture the honeycomb structured body with improved yield.

According to the present disclosure, a distance between the two spacers across the center of gravity may be 25 to 45% of a length in a longitudinal direction of the honeycomb fired body.
According to this feature, by setting a distance between the two spacers to the range, it is possible to more effectively exert both the effect of minimizing the force to be applied in the direction in which the honeycomb molded body sinks due to its own weight and the effect of minimizing warpage that will occur along the direction in which the bottom plate of the firing jig will warp.
Accordingly, it is possible to manufacture a honeycomb fired body with smaller warpage.

In the firing of the present disclosure, when the honeycomb molded body placed on the spacer is viewed in a plan view, the spacer may be disposed on a location overlapped with each of the middle points.
Therefore, a single spacer can be disposed so as to include both an area on a side of the center of gravity of the honeycomb fired body and an area on a side of one of the end faces, upon a single middle point being used as reference standard.
Accordingly, it is possible to readily manufacture a honeycomb fired body with small warpage.

In the present disclosure, a length in the longitudinal direction of the spacer overlapped with the middle point may be 20 to 50 mm.

According to this feature, since the length of the spacer in the longitudinal direction of the honeycomb molded body is set to 20 mm or more, a distance between a side of the spacers closest to the center of gravity of the honeycomb molded body and the center of gravity of the honeycomb molded body and a distance between a side of the spacers closest to each of the end faces of the honeycomb molded body and each of the end faces of the honeycomb molded body are made shorter, it is possible to reduce the force to be applied to the vicinity of both the center of gravity and the end face of the honeycomb molded body. Accordingly, it is possible to manufacture a honeycomb fired body with smaller warpage.
In addition, firing may be insufficient on an area where the spacer contacts the honeycomb molded body, the insufficient firing may lower strength of the honeycomb fired body. According to this feature, since the length of the spacer in the longitudinal direction of the honeycomb molded body is 50 mm or less, it is possible to reduce the size of an area where the spacer contacts the honeycomb molded body and firing is insufficient, and consequently to manufacture a honeycomb fired body with higher strength.

In the invention according to claim 1, in the firing treatment, when the honeycomb molded body placed on the spacer is viewed in a plan view, the spacers are disposed so that each of the middle points is sandwiched between at least two spacers where a center side spacer is disposed in an area on a side of the center of gravity of the honeycomb molded body and an end face side spacer of the honeycomb molded body is disposed in an area on a side of an end face, upon each of the middle points being used as reference standard.

According to the invention in accordance with claim 1, it is possible to manufacture a honeycomb fired body with small warpage because the spacers are disposed, with respect to a single middle point, on both a side of the center of gravity and a side of each of the end faces, of the honeycomb molded body, upon the single middle point being used as reference standard.
Furthermore, it is possible to reduce the size of an area where the spacer contacts the honeycomb molded body and firing is insufficient, and consequently to manufacture a honeycomb fired body with higher strength.
In addition, since sintering of the honeycomb molded body tends not to proceed on an area where the honeycomb molded body contacts the spacer, and the surface of the honeycomb fired body after fired tends to become rough (become a state having projections and depressions). However, according to the invention in accordance with claim 1, since firing is carried out very sufficiently, it is possible to manufacture a honeycomb fired body with the smooth surface of an area that the spacer has contacted.

In the invention according to claim 2, a distance between a location closest to the center of gravity of the end face of the end face side spacer and a location closest to the center of gravity of the center side spacer is 30 to 50 mm. In addition, in the invention according to claim 1, a distance between a location closest to the center of gravity of the end face of said end face side spacer and a location closest to the center of gravity of the center side spacer is 9 to 16% of a length in a longitudinal direction of the honeycomb fired body.
According to the invention in accordance with claims 1 and 2, it is possible to manufacture a honeycomb fired body with smaller warpage.

In the invention according to claim 3, lengths in the longitudinal direction of the end face side spacer and the center side spacer are 5 to 10 mm.
In the case where the length in the longitudinal direction of the spacer is too small, the honeycomb molded body is more likely to be misaligned upon placing the honeycomb molded body on the spacer in the firing jig. According to the invention in accordance with claim 3, since the length in the longitudinal direction of the spacer is set to 5 mm or more, it is possible to prevent misalignment of the honeycomb molded body.
Furthermore, since the length in the longitudinal direction of the spacer is set to 10 mm or less, it is possible to further reduce the size of an area where the honeycomb molded body contacts the spacer. Accordingly, it is possible to manufacture a honeycomb fired body with higher strength and with the smooth surface of an area that the spacer has contacted (not in a state having projections and depressions).

In the invention according to claim 4, in the firing treatment, when the honeycomb molded body placed on the spacer is viewed in a plan view, the spacer is disposed on a location axisymmetric with respect to a line, the line passing through a center of gravity of the honeycomb molded body and being perpendicular to the longitudinal direction.
According to the invention in accordance with claim 4, it is possible to distribute, in a balanced manner, the force applied to the vicinity of the center of gravity of the honeycomb molded body and the vicinity of each of the end faces thereof. Accordingly, it is possible to manufacture a honeycomb fired body with smaller warpage and higher dimensional accuracy.

In the invention according to claim 5, a length in a longitudinal direction of the honeycomb molded body is 305 mm or more.
According to the invention in accordance with claim 5, it is possible to manufacture a honeycomb fired body with smaller warpage and higher strength even in the case where the honeycomb molded body has a longer length, and consequently to manufacture a honeycomb structured body with improved yield.

According to the invention in accordance with claim 6, the pillar-shaped honeycomb molded body is manufactured by molding a raw material composition including at least silicon carbide powder and a binder.
According to the invention in accordance with claim 6, even when a firing treatment is carried out with the honeycomb molded body including silicon carbide being placed, since the firing treatment is carried out with the honeycomb molded body placed on the spacers, it is possible to manufacture a honeycomb fired body having higher strength while preventing formation of coarse particles of silicon carbide on the bottom plate of the firing jig.

### BEST MODE FOR CARRYING OUT THE INVENTION

### (First Embodiment)

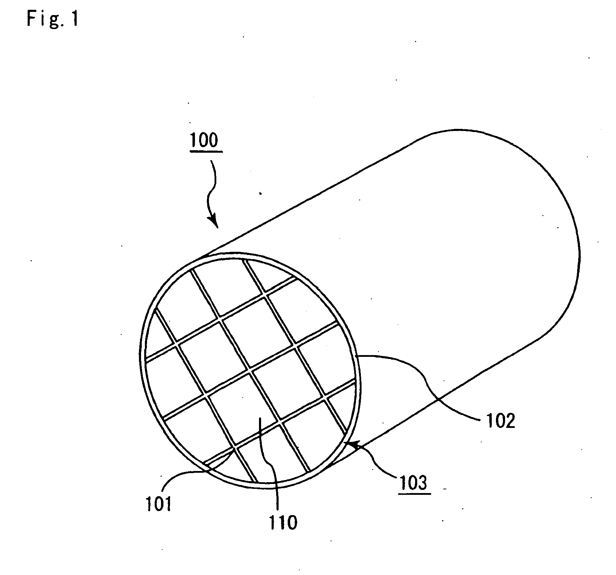

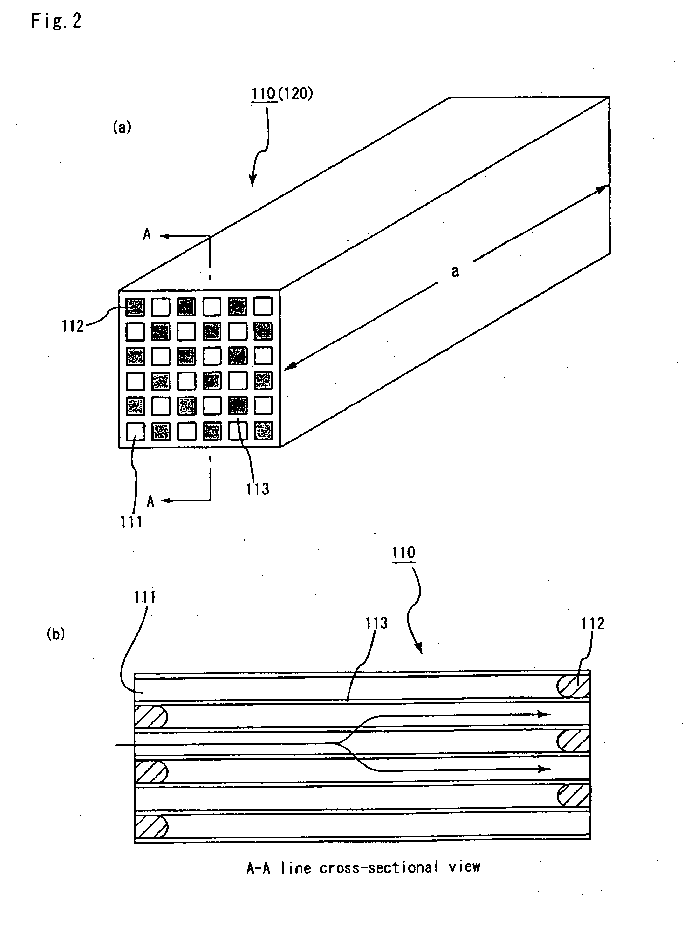

Hereinafter, a first embodiment will be described.
In the first embodiment, a honeycomb fired body shown in Figs. 2(a) and 2(b) and a honeycomb structured body shown in Fig. 1 are manufactured.

Fig. 1 is a perspective view schematically showing one example of a honeycomb structured body, Fig. 2(a) is a perspective view schematically showing a honeycomb fired bodies forming the honeycomb structured body shown in Fig. 1, and Fig. 2(b) is a cross-sectional view taken along line A-A of Fig. 2 (a).

In a honeycomb structured body 100, a plurality of honeycomb fired bodies 110, as shown in Fig. 1, are bound together by interposing an adhesive layer 101 to form a ceramic block 103, and a coat layer 102 is formed on the periphery of the ceramic block 103.
In addition, as shown in Fig. 2 (a), in the honeycomb fired body 110, a large number of cells 111 are disposed in parallel with one another in a longitudinal direction (a direction shown by an arrow a in Fig. 2 (a)) so that cell walls 113 partitioning the cells 111 are allowed to function as filters.
Moreover, in the present specification, the term "end face" of the honeycomb fired body refers to faces at which cells are exposed among the faces forming the outer shape of the honeycomb fired body, while the term "side face" refers to all faces that are not end faces.

More specifically, as shown in Fig. 2(b), the ends of either an exhaust gas inlet side or an exhaust gas outlet side of the cells 111 formed in the honeycomb fired body 110 is sealed with a plug material layer 112. Therefore, the exhaust gas that enters one cell 111 will always pass through the cell wall 113 partitioning the cells 111 to flow out through another one of the cells 111. When the exhaust gas passes through the cell wall 113, particulates contained within the exhaust gas are captured by the cell wall 113, to thereby purify the exhaust gas.

Here, a method for placing the honeycomb molded body in the firing jig in the degreasing treatment and the firing treatment will be described first, and thereafter all the manufacturing processes of the method for manufacturing a honeycomb structured body will be described in the order of processes.

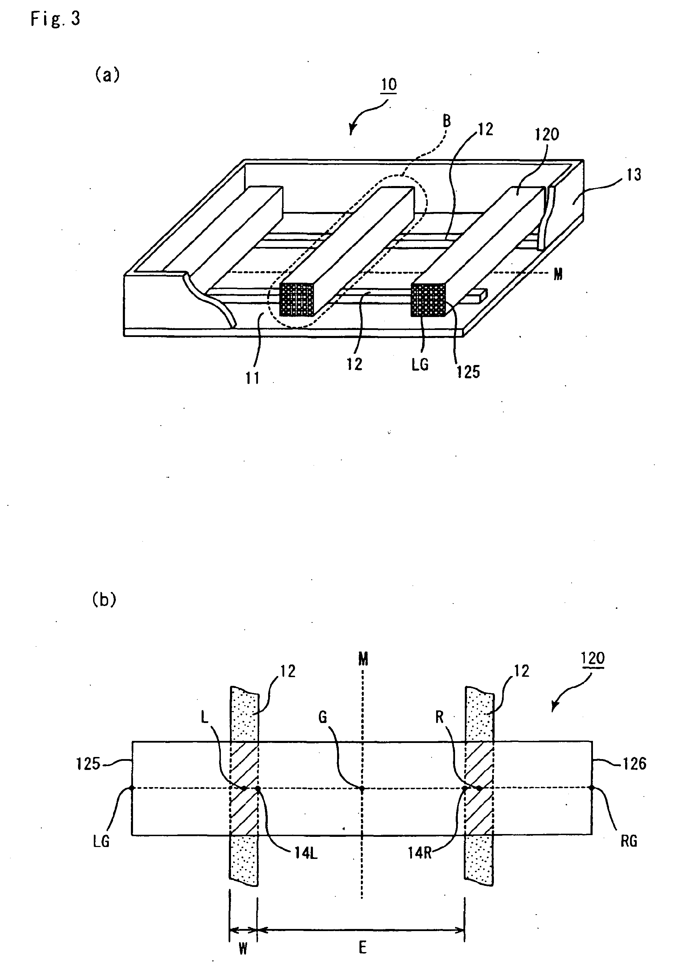

Fig. 3(a) is a partially cut-out perspective view schematically showing a method for placing honeycomb molded bodies in a firing jig in the first embodiment, and Fig. 3(b) is a plan view of the portion shown by B in Fig. 3(a).
Here, in Fig. 3(a), a portion of a side wall member of the firing jig is omitted so that it may be easier to seize the placement state of the honeycomb molded body.
In addition, Fig. 3 (b) shows a view rotated by 90 degrees relative to Fig. 3 (a) so that the longitudinal direction of the honeycomb molded body is a direction horizontal to the paper surface.

A firing jig 10 shown in Fig. 3(a) is made of carbon and has a box shape with its upper surface open. The box shape is made of a rectangular plate-shaped bottom plate 11 and a side wall member 13 vertically installed on four sides of the bottom plate 11. The dimension of the firing jig is designed so that a length of the shorter side of the bottom plate 11 is slightly longer than a length in the longitudinal direction of the honeycomb molded body 120.
In addition, on the bottom plate 11, two spacers 12 for placing the honeycomb molded body 120 are disposed on a location axisymmetric with respect to a center line that passes through a middle point of the shorter side of the bottom plate 11.

The spacer 12 is made of carbon felt formed by combining carbon fibers into a cloth-like shape, has a thickness of 2.0 to 5.0 mm, and has a length of the shorter side of 20 to 50 mm. A length of the longer side of the spacer 12 is slightly shorter than a length of the longer side of the bottom plate 11 of the firing jig 10.
And in the firing treatment of the present embodiment, two spacers 12 are disposed on the bottom plate 11, and the honeycomb molded body 120 is placed so as to give a predetermined positional relationship with the two spacers 12.
Hereinafter, the predetermined positional relationship will be described.

Fig. 3 (b) is a plan view of the portion shown by B in Fig. 3 (a). Considering the points that show the locations of centers of gravity of a left side end face 125 and a right side end face 126 of the honeycomb molded body 120 in the plan view, since the honeycomb molded body has a rectangular pillar shape whose both end faces are an almost square shape, the center of gravity of the left side end face LG of the honeycomb molded body 120 serves as the middle point of the line segment that shows the left side end face 125, and the center of gravity of the right side end face RG serves as the middle point of the line segment that shows the right side end face 126.
And the middle points between the center of gravity of the left side end face LG or the center of gravity of the right side end face RG, and the center of gravity G, of the honeycomb molded body 120, as thus specified, serves as the left side middle point L and the right side middle point R, respectively, of the honeycomb molded body 120.

In the present embodiment, the honeycomb molded body 120 is placed on two spacers 12 so that one of the two spacers 12 is overlapped with the left side middle point L and the other spacer 12 is overlapped with the right side middle point R, when the honeycomb molded body 120 placed on the spacers 12, as shown in Fig. 3(b), is viewed in a plan view.
When the spacers are overlapped with each of the two middle points, the spacers are disposed with respect to each of the middle points L or R so as to include both an area on a side of the center of gravity and an area on a side of each of the end faces, of the honeycomb molded body 120.
In addition, in the present embodiment, the positional relationship between the honeycomb molded body 120 and the two spacers 12 is determined so that the spacers 12 are disposed on a location axisymmetric with respect to a line M that passes through the center of gravity G of the honeycomb molded body and is perpendicular to the longitudinal direction thereof.

Furthermore, in the present embodiment, in the plan view shown in Fig. 3(b), the positional relationship between the honeycomb molded body 120 and the two spacers 12 is determined so that the center of gravity G of the honeycomb molded body 120 is sandwiched between the two spacers 12 in the longitudinal direction of the honeycomb molded body 120.

In addition, in the present embodiment, a length of the spacer 12 in the longitudinal direction of the honeycomb molded body 120 refers to a length shown by W in Fig. 3(b), and the length W is equal to a length of the shorter side of the spacer and is 20 to 50 mm.
Hereinafter, in the present specification, the length W is referred to as a length W of the spacer in the longitudinal direction or a length W.

In addition, the distance between the two spacers 12 refers to a distance shown by E in Fig. 3(b) and is 25 to 45% of the length in the longitudinal direction of the honeycomb molded body 120.
The distance E is defined as a proportion (%), to the full length of the honeycomb molded body, of the distance E between: 14L that is on the line passing through the center of gravity of the left side end face LG and the center of gravity G of the honeycomb molded body and that is closest to the center of gravity G of the spacer 12 overlapped with the middle point L; and 14R that is on the line passing through the center of gravity of the right side end face RG and the center of gravity G of the honeycomb molded body and that is closest to the center of gravity G of the spacer 12 overlapped with the middle point R.
Hereinafter, in the present specification, the distance E (%) is referred to as a distance E between spacers or a distance E.

Next, all the manufacturing processes of the method for manufacturing a honeycomb structured body including the degreasing treatment and the firing treatment thus carried out with the honeycomb molded body placed in the firing jig will be described in the order of processes.

First, a mixed powder is prepared by dry mixing a raw material composition such as silicon carbide powder having different average particle diameters from each other and an organic binder, and a mixed liquid is prepared by mixing a liquid plasticizer, a lubricant and water. Subsequently, the mixed powder and the mixed liquid are mixed with a wet mixer to prepare a wet mixture for manufacturing a molded body.

Next, the molding process of carrying the wet mixture in an extrusion-molding machine for extrusion-molding is carried out.
And a rectangular pillar-shaped honeycomb molded body shown in Fig. 2 (a) is manufactured by cutting, with a cutting apparatus, the long honeycomb molded body obtained through extrusion-molding.
In the present embodiment, the honeycomb molded body is cut so that a length in the longitudinal direction of the honeycomb molded body is 305 mm or more.
Subsequently, the honeycomb molded body is dried using a drying apparatus combining microwaves and hot air.

Next, the ends of the outlet sides of the inlet side cell group and the ends of the inlet sides of the outlet side cell group are filled with a predetermined amount of plug material paste, which is to be the plug, and then the cells are sealed. When sealing the cells, a sealing mask is first applied to the end faces (the cut faces after the cutting) of the honeycomb molded body, and thereafter the plug material paste is injected only to the cells that needs sealing.
The honeycomb molded body filled with plug material paste is manufactured through the processes.

Next, the honeycomb molded body filled with plug material paste is placed on the spacers in the firing jig so that the honeycomb molded body may have the above-mentioned positional relationship with the spacer, and degreasing is carried out at a degreasing temperature of 250 to 390°C in a degreasing furnace with an oxygen concentration of 5 to 13% by volume in the atmosphere, so that organic substances contained in the honeycomb molded body were removed.
Subsequently, with the honeycomb molded body that has undergone the degreasing treatment being placed in the firing jig, a firing treatment was carried out at 2200°C, for example, in an argon atmosphere for 3 hours to manufacture a honeycomb fired body.

And sealing material paste to form an adhesive layer is applied to side faces of the obtained honeycomb fired body so that a sealing material paste layer is formed, and lamination of another honeycomb fired body on the sealing material paste layer is sequentially repeated, and bonding is carried out to manufacture an honeycomb aggregated body with a predetermined number of honeycomb fired bodies being bonded together. Moreover, examples of the sealing material paste include a substance containing an inorganic binder, an organic binder, and at least one of inorganic fibers and inorganic particles.

Next, the honeycomb aggregated body is heated for drying and solidifying an adhesive paste layer to form an adhesive layer. Thereafter, cutting is carried out on the honeycomb aggregated body by using a diamond cutter to form a ceramic block, sealing material paste is applied to the outer periphery of the ceramic block, and the sealing material paste is dried and solidified to form a coat layer, so that the manufacturing of the honeycomb structured body is completed.
Moreover, as the sealing material paste used for formation of the adhesive layer and the coat layer, the same or different sealing material paste may be used.

Hereinafter, the effects of the method for manufacturing the honeycomb structured body of the present embodiment will be mentioned.
(1) Since a firing treatment is carried out with the honeycomb molded body placed on the spacers, it is possible to manufacture a honeycomb fired body having higher strength while preventing formation of coarse particles of silicon carbide on the bottom plate of the firing jig.

(2) Since the spacers are not disposed in the vicinity of the center line of the bottom plate of the firing jig, that is, just under the center of gravity of the honeycomb molded body. Thus, less force is applied in the direction in which the honeycomb molded body is lifted up by interposing the spacers even in the case where the vicinity of the center of the bottom plate of the firing jig is lifted up. Therefore, it is possible to reduce warpage that will occur in a honeycomb fired body along the direction in which the bottom plate of the firing jig warps.
Accordingly, it is possible to manufacture a honeycomb fired body with smaller warpage even upon repetitive use of the firing jig.

(3) Since the spacers are disposed with respect to each of the two middle points between the center of gravity of the honeycomb molded body and centers of gravity of each of the end faces of the honeycomb molded body so as to be present on a side of the center of gravity of the honeycomb molded body, upon each of the middle points being used as reference standard, and it is possible to reduce the force to be applied to the vicinity of the center of gravity of the honeycomb molded body.
Accordingly, it is possible to manufacture a honeycomb fired body with small warpage.

(4) Since the spacers are disposed with respect to each of the two middle points between the center of gravity of the honeycomb molded body and centers of gravity of each of the end faces of the honeycomb molded body so as to be present on a side of each of the end faces of the honeycomb molded body, upon each of the middle points being used as reference standard, and it is possible to reduce the force to be applied to the vicinity of each of the end faces of the honeycomb molded body. Accordingly, it is possible to manufacture a honeycomb fired body with small warpage.

(5) Since a distance between the two spacers across the center of gravity of the honeycomb molded body is set to 25 to 45% of a length in a longitudinal direction of the honeycomb fired body, it is possible to exert both the effect of minimizing the force to be applied in the direction in which the honeycomb molded body sinks due to its own weight and the effect of minimizing warpage that will occur along the direction in which the bottom plate of the firing jig will warp. Accordingly, it is possible to manufacture a honeycomb fired body with smaller warpage.

(6) Since the spacers are disposed on a location overlapped with the middle points, a single spacer can be disposed so as to include both an area on a side of the center of gravity of the honeycomb fired body and an area on a side of one of the end faces, upon a single middle point being used as reference standard. Accordingly, it is possible to manufacture a honeycomb fired body with small warpage.

(7) Since the length of the spacer in the longitudinal direction of the honeycomb molded body is set to 20 mm or more, a distance between a side of the spacers closest to the center of gravity of the honeycomb molded body and the center of gravity of the honeycomb molded body and a distance between a side of the spacers closest to each of the end faces of the honeycomb molded body and each of the end faces of the honeycomb molded body are made shorter, it is possible to reduce the force to be applied to the vicinity of both the center of gravity and the end face of the honeycomb molded body. Accordingly, it is possible to manufacture a honeycomb fired body with small warpage.

(8) Since the length W of the spacer in the longitudinal direction of the honeycomb molded body is set to 50 mm or less, it is possible to reduce the size of an area where the spacer contacts the honeycomb molded body. Accordingly, it is possible to manufacture a honeycomb fired body having higher strength after sufficient firing.

(9) Since the spacer is disposed on a location axisymmetric with respect to a line that passes through the center of gravity of the honeycomb molded body and is perpendicular to the longitudinal direction, it is possible to distribute, in a balanced manner, the force applied to the vicinity of the center of gravity of the honeycomb molded body and the vicinity of each of the end faces thereof. Accordingly, it is possible to manufacture a honeycomb fired body with smaller warpage.

(10) Since it is possible to reduce the force to be applied to the vicinity and the end face of the honeycomb molded body, it is possible to manufacture a honeycomb fired body with small warpage although the length in the longitudinal direction of the honeycomb molded body is set to be longer, that is, 305 mm or more.

The following shows Examples more specifically disclosing the first embodiment.

### (Example 1)

First, 52.2% by weight of silicon carbide coarse powder having an average particle diameter of 22 µm, 22.4% by weight of silicon carbide fine powder having an average particle diameter of 0. 5 µm were wet-mixed, and to the obtained mixture were added and kneaded 4.8% by weight of acrylic resin, 2.6% by weight of an organic binder (methylcellulose), 2.9% by weight of a lubricant (UNILUB, manufactured by NOF Corp.), 1.3% by weight of glycerin, and 13.8% by weight of water to obtain a wet mixture.

Next, the molding process of carrying the wet mixture in a extrusion-molding machine for continuously extrusion-molding a pillar-shaped honeycomb molded body was carried out. Subsequently, a honeycomb molded body having a shape shown in Figs. 2 (a) and 2 (b) is manufactured by cutting the extrusion-molded honeycomb molded body with a cutting member installed in a cutting apparatus.
The honeycomb molded body had a size of 33.0 mm x 33.0 mm x 330.2 mm.

Next, the honeycomb molded body was dried using a drying apparatus combining microwaves and hot air, and subsequently the plug material paste having the same composition as the composition used for extrusion-molding was injected to prescribed cells.

Subsequently, two spacers made of carbon felt (shorter side 20 mm x longer side 410 mm x thickness 5 mm) were disposed on a box-shaped firing jig made of a porous carbon (G100, manufactured by Tokai Carbon, Co., Ltd.) with one of its principal surface open (shorter side of the bottom plate 350 mm x longer side of the bottom plate 430 mm x height 45 mm), and three honeycomb molded bodies were placed on the two spacers at regular intervals so that the longitudinal direction of each of the honeycomb molded bodies is perpendicular to longer sides of the spacers.

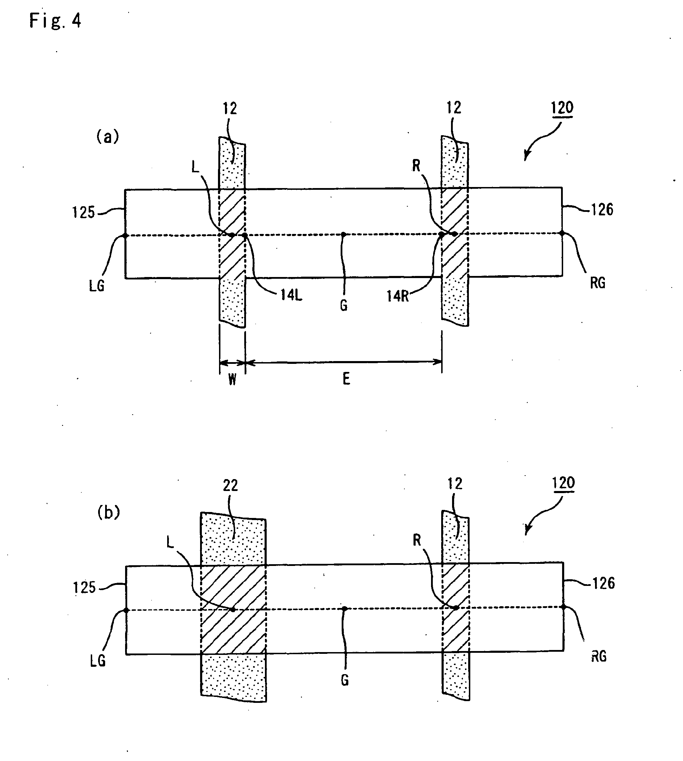

Figs. 4(a) and 4(b) are plan views schematically each showing a positional relationship between spacers and a honeycomb molded body in the respective Examples.
In the present Example, as shown in Fig. 4(a), when the honeycomb molded body is viewed in a plan view, two spacers 12 were disposed on locations where each of the spacers is overlapped with each of two middle points L and R formed by centers of gravity LG, RG in the longitudinal direction of the honeycomb molded body and the center of gravity G of the honeycomb molded body.
In addition, in the present Example, the length W is a length of the shorter side of the spacer 12, that is, 20 mm, and the distance E between the spacers is 43.9% of the full length of the honeycomb molded body.

Next, the firing jig with the honeycomb molded body placed thereon was transported into a continuous-type degreasing furnace, and a degreasing treatment was carried out by heating at 400°C in a mixed gas atmosphere of air having an oxygen concentration of 9% by volume and nitrogen.

Subsequently, the degreased honeycomb molded body was transported into a firing apparatus, and a firing treatment was carried out at 2200°C in a normal-pressure argon atmosphere for 3 hours to manufacture a honeycomb fired body in a square pillar shape.

### (Comparative Example 1)

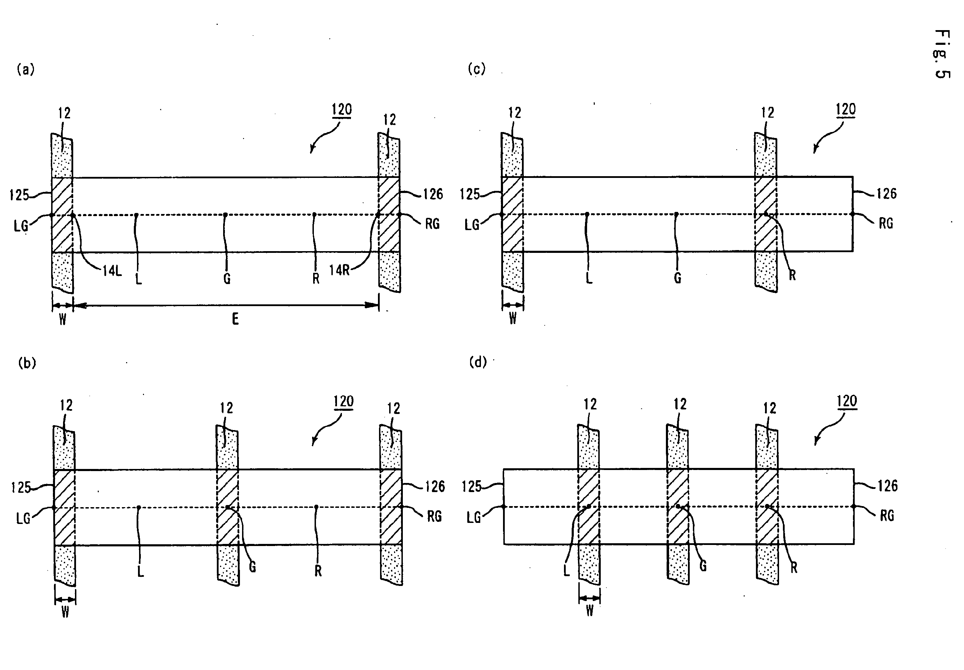

Figs. 5(a), 5(b), 5(c), and 5(d) are plans view schematically each showing a positional relationship between spacers and a honeycomb molded body and in the respective Comparative Examples.
A honeycomb fired body was manufactured in the same manner as in Example 1, except that in the degreasing treatment and the firing treatment, as shown in Fig. 5 (a), each of the spacers was disposed on a location where each of the end faces of the honeycomb molded body was overlapped with a longer side of each of the spacers so that the spacer was located only on a side of each of the end faces, upon the middle point L or R being used as reference standard.

### (Comparative Example 2)

A honeycomb fired body was manufactured in the same manner as in Example 1, except that in the degreasing treatment and the firing treatment, as shown in Fig. 5 (b), in addition to the two spacers disposed on the same locations as in Comparative Example 1, one spacer was further disposed so that the center of gravity G was overlapped with the spacer.

### (Comparative Example 3)

A honeycomb fired body was manufactured in the same manner as in Example 1, except that in the degreasing treatment and the firing treatment, as shown in Fig. 5(c), one spacer was disposed on a location where an end face of the honeycomb molded body was overlapped with a longer side of the spacer so that the one spacer was located only on a side of the end face, upon the middle point L being used as reference standard, and the other spacer was disposed so that the middle point R was overlapped with the spacer.

### (Comparative Example 4)

A honeycomb fired body was manufactured in the same manner as in Example 1, except that in the degreasing treatment and the firing treatment, as shown in Fig. 5 (d), in addition to the two spacers disposed on the same locations as in Example 1, one spacer was further disposed so that the center of gravity G was overlapped with the spacer.

### (Comparative Example 5)

A honeycomb fired body was manufactured in the same manner as in Example 1, except that in the degreasing treatment and the firing treatment, the honeycomb molded body was placed directly on the bottom plate of the firing jig without disposing spacers.

The following evaluation (measurement) was made on the honeycomb fired bodies obtained in the respective Examples and Comparative Examples described thus far.

### (1) Measurement of warpage amount

Measurement of the warpage amount was made using a warpage amount measurement jig.
As the warpage amount measurement jig, a straight rectangular block made of SUS and having a length of almost the same as the full length of the molded body is used, and contact members of identical thickness are disposed on both ends of the block. In addition, a scale, which is slidable in the direction perpendicular to the longitudinal direction of the block, is installed at the center of the block.
At the time of measurement, the contact members were made in contact with the vicinity of both ends of the molded body, a scale for measuring the warpage amount was then moved toward the molded body, and the warpage amount was measured by reading the amount of movement of the scale when the scale contacted the molded body. Table 1 shows the results.

### (2) Evaluation on fired state

### (a) Evaluation on bending strength

With reference to JIS R 1624, a four-point bending strength test was conducted for the obtained honeycomb fired body to evaluate a bending strength.
More specifically, a bending strength tester (Instron 5582) was used to conduct a four-point bending strength test on randomly selected honeycomb fired bodies (5 samples) by applying a load of 51 MPa, with an upper span distance of 195 mm and a lower span distance of 308 mm, and at a speed of 0.35 mm/min, to determine whether cracks occurred on the respective honeycomb fired bodies.
Moreover, the span distance and load were calculated so that a stress was set to 30 MPa based on geometrical moment of inertia upon consideration of a length of the molded body, a thickness of cell walls, and cell density.
Table 1 shows the results, provided that the case where cracks did not occur in any of the five samples is indicated by "++", the case where cracks occurred in any of the five samples is indicated by "+", the case where cracks occurred in all of the five samples is indicated by "-".

### (b) Evaluation on appearance

The obtained honeycomb fired body was visually evaluated for appearance of an area that contacted the spacer in the firing treatment.
Table 1 shows the results provided that the case where the surface of the area was smooth is indicated by "+++", and the others are indicated by "++", "+", and "-" based on the order of how less rough the surface of the area is.
In Table 1, in the column of "Spacers overlapped with middle point", "yes" represents the case where a spacer is overlapped with each of the middle points, and "no" represents the case where a spacer is not overlapped with either of the middle points. In the column of "Spacers sandwiching center of gravity", "yes" represents the case where the center of gravity of the honeycomb molded body is sandwiched between spacers, and "no" represents the case where the center of gravity of the honeycomb molded body is overlapped with a spacer.

**[Table 1]**

| | Disposition of spacers | Spacers overlapped with middle point | Spacers sandwiching center of gravity | Length W (mm) | Distance E (%) | Length of molded body (mm) | Warpage (mm) | Fired state | |
|---|---|---|---|---|---|---|---|---|---|
| | | | | | | | | Bending strength | Appearance |
| Example 1 | Fig. 4(a) | yes | yes | 20 | 43.9 | 330.2 | 0.5 to 0.8 | ++ | ++ |
| Comparative Example 1 | Fig. 5(a) | no | yes | 20 | 87.9 | 330.2 | > 1.0 | ++ | ++ |
| Comparative Example 2 | Fig. 5(b) | no | no | 20 | NA | 330.2 | > 1.0 | ++ | ++ |
| Comparative Example 3 | Fig. 5 (c) | yes/no (Note 1) | yes | 20 | 65.9 | 330.2 | > 1.0 | ++ | ++ |
| Comparative Example 4 | Fig. 5(d) | yes | no | 20 | NA | 330.2 | > 1.0 | ++ | ++ |
| Comparative Example 5 | NA | NA | NA | NA | NA | 330.2 | > 1.0 | - | - |

| | | | | | | | | | |
|---|---|---|---|---|---|---|---|---|---|
| (Note 1) "yes/no" represents the case where one spacer is disposed so as to be overlapped with one middle point and the other spacer is disposed so as not to be overlapped with the other middle point. NA = Not Available | | | | | | | | | |

As is clear from the results shown in Table 1, in Example 1, since a firing treatment was carried out so that the spacers were disposed so as to be overlapped with each of the two middle points, the obtained honeycomb fired body had a small warpage of 0.8 mm or less.
In addition, the honeycomb fired body obtained in Example 1 had sufficient bending strength. This has revealed that according to the method in Example 1 it is possible to manufacture a preferable honeycomb fired body for manufacturing a honeycomb structured body.

In contrast, each of the honeycomb fired bodies obtained in Comparative Examples 1 to 5 had a large warpage of more than 1.0 mm, and was a honeycomb fired body not appropriate for manufacturing a honeycomb structured body. The warpage occurred presumably because the location of the spacer was not appropriate or the spacer was not used.

### (Examples 2 to 4)

A honeycomb fired body was manufactured in the same manner as in Example 1, except that in the degreasing treatment and the firing treatment, the spacer having a length of the shorter side of 30 to 50 mm and having the length W (30 to 50 mm) shown in Table 2 was disposed.

### (Reference Examples 1 to 5)

A honeycomb fired body was manufactured in the same manner as in Example 1, except that in the degreasing treatment and the firing treatment, the spacer having a length of the shorter side of 10 mm, or 60 mm to 90 mm, and having the length W (10 mm, or 60 mm to 90 mm) shown in Table 2 was disposed.

The honeycomb fired bodies obtained in the respective Examples and Reference Examples were evaluated for warpage amount and fired state. Table 2 shows the results, as well as the results of Example 1.

**[Table 2]**

| | Disposition of spacers | Spacers overlapped with middle point | Spacers sandwiching center of gravity | Length W (mm) | Distance E (%) | Length of molded body (mm) | Warpage (mm) | Fired state | |
|---|---|---|---|---|---|---|---|---|---|
| | | | | | | | | Bending strength | Appearance |
| Reference Example 1 | Fig. 4(a) | yes | yes | 10 | 46.9 | 330.2 | 0.8 to 1.0 | ++ | ++ |
| Example 1 | Fig. 4(a) | yes | yes | 20 | 43.9 | 330.2 | 0.5 to 0.8 | ++ | ++ |
| Example 2 | Fig. 4 (a) | yes | yes | 30 | 40.9 | 330.2 | <= 0.5 | ++ | + |
| Example 3 | Fig. 4 (a) | yes | yes | 40 | 37.9 | 330.2 | <= 0.5 | ++ | + |
| Example 4 | Fig. 4(a) | yes | yes | 50 | 34.8 | 330.2 | <= 0.5 | ++ | + |
| Reference Example 2 | Fig. 4 (a) | yes | yes | 60 | 31.8 | 330.2 | <= 0.5 | + | + |
| Reference Example 3 | Fig. 4 (a) | yes | yes | 70 | 28.8 | 330.2 | <= 0.5 | + | + |
| Reference Example 4 | Fig. 4 (a) | yes | yes | 80 | 25.8 | 330.2 | 0.5 to 0.8 | + | + |
| Reference Example 5 | Fig. 4(a) | yes | yes | 90 | 22.7 | 330.2 | 0.8 to 1.0 | + | + |

As is clear from the results in Table 2, when the length W of the spacer was set to 20 mm or more, the manufactured honeycomb fired body had a small warpage of 0.8 mm or less.
In particular, when the length W of the spacer was set to 30 mm or more, the manufactured honeycomb fired body had a very small warpage of 0.5 mm or less.
In addition, when the length W of the spacer is set to 50 mm or less, the obtained honeycomb fired body had satisfactory bending strength.
This is presumably because the smaller an area where the spacer contacts the honeycomb molded body is, the more sufficiently firing is carried out.
In addition, the distance E varies as the length W varies. Warpage was low, that is, 0.8 mm or less, when the distance E was in the range of 25 to 45% as in the case of Examples 1 to 4 and Reference Examples 2 to 4.

### (Example 5)

A honeycomb fired body was manufactured in the same manner as in Example 1, except that the honeycomb molded body having a length in the longitudinal direction of 355.6 mm was manufactured by changing the cutting dimension upon cutting the extrusion-molded honeycomb molded body.

### (Reference Example 6)

A honeycomb fired body was manufactured in the same manner as in Example 1, except that the honeycomb molded body having a length in the longitudinal direction of 304.8 mm was manufactured by changing the cutting dimension upon cutting the extrusion-molded honeycomb molded body.

### (Comparative Example 6)

A honeycomb fired body was manufactured in the same manner as in Example 1, except that the honeycomb molded body having a length in the longitudinal direction of 304.8 mm was manufactured by changing the cutting dimension upon cutting the extrusion-molded honeycomb molded body, and that in the firing treatment, as shown in Fig. 5(a), each of the spacers was disposed on a location where each of the end faces of the honeycomb molded body was overlapped with a longer side of each of the spacers so that the spacer was located only on a side of each of the end faces, upon the middle point L or R being used as reference standard.

The honeycomb fired bodies obtained in the respective Examples, Reference Examples, and Comparative Examples were evaluated for warpage amount and fired state. Table 3 shows the results, as well as the results of Example 1 and Comparative Example 1.
Moreover, upon measurement of bending strength, the span distance and load were changed according to a length of the molded body.

**[Table 3]**

| | Disposition of spacers | Spacers overlapped with middle point | Spacers sandwiching center of gravity | Length W (mm) | Distance E (%) | Length of molded body (mm) | Warpage (mm) | Fired state | |
|---|---|---|---|---|---|---|---|---|---|
| | | | | | | | | Bending strength | Appearance |
| Reference Example 6 | Fig. 4 (a) | yes | yes | 20 | 43.5 | 304.8 | 0.5 to 0.8 | ++ | ++ |
| Example 1 | Fig. 4(a) | yes | yes | 20 | 43.9 | 330.2 | 0.5 to 0.8 | ++ | ++ |
| Example 5 | Fig. 4 (a) | yes | yes | 20 | 44.3 | 355.6 | 0.5 to 0.8 | ++ | ++ |
| Comparative Example 1 | Fig. 5(a) | no | yes | 20 | 87.9 | 330.2 | > 1.0 | ++ | ++ |
| Comparative Example 6 | Fig. 5(a) | no | yes | 20 | 86.9 | 304.8 | 0.8 to 1.0 | ++ | ++ |

| | | | | | | | | | |
|---|---|---|---|---|---|---|---|---|---|
| NA = Not Available | | | | | | | | | |

As is clear from the results in Table 3, in Examples 1 and 5, although the honeycomb molded body had a long length in the longitudinal direction of 330.2 mm or 355.6 mm, the obtained honeycomb fired body had small warpage of 0.8 mm or less.
In contrast, in the case where firing was carried out so that the spacer was disposed so as to be located only on a side of each of the end faces, upon the middle point L or R being used as reference standard, the obtained honeycomb fired body had a warpage of 1.0 mm or less, not so large a value, when a length of the molded body was less than 305 mm; on the other hand, the obtained honeycomb fired body had a warpage of more than 1.0 mm, when a length of the molded body was 305 mm or more.
In addition, upon comparing Reference Example 6 and Comparative Example 6, in the case where a length in the longitudinal direction of the honeycomb molded body was set to 304.8 mm, regardless of the location where the spacer was disposed, the manufactured honeycomb fired body had a small warpage of 0.8 mm or less.
Accordingly, it has become apparent that it is possible to reduce warpage by carrying out a firing treatment using the method for manufacturing a honeycomb structured body especially in the case where a length of the molded body is set to 305 mm or more.

### (Reference Example 7)

In the degreasing treatment and the firing treatment, as shown in Fig. 4 (b), when a honeycomb molded body placed on spacers was viewed in a plan view, two spacers were disposed provided that a length of the shorter side of the spacer 22 disposed on a location overlapped with the middle point L was set to 50 mm, a length of the shorter side of the spacer 12 disposed on a location overlapped with the middle point R was set to 20 mm. Subsequently, the honeycomb molded body was placed on the two spacers.
The present Reference Example had a structure in which the spacers disposed were not axisymmetric with respect to a line that passes through the center of gravity of the honeycomb molded body and is perpendicular to the longitudinal direction.
As thus described, a honeycomb fired body was manufactured in the same manner as in Example 1, except that a length of the shorter side of the spacer was changed.

The honeycomb fired bodies obtained in the Reference Example were evaluated for warpage amount and fired state. Table 4 shows the results, as well as the results of Example 1.

**[Table 4]**

| | Disposition of spacers | Spacers overlapped with middle point | Spacers sandwiching center of gravity | Length W (mm) | Distance E (%) | Length of molded body (mm) | Warpage (mm) | Fired state | |
|---|---|---|---|---|---|---|---|---|---|
| | | | | | | | | Bending strength | Appearance |
| Example 1 | Fig. 4 (a) | yes | yes | 20 | 43.9 | 330.2 | 0.5 to 0.8 | ++ | ++ |
| Reference Example 7 | Fig. 4(b) | yes | yes | 50/20 (Note 2) | 39.3 | 330.2 | 0.8 to 1.0 | ++ | ++ |

| | | | | | | | | | |
|---|---|---|---|---|---|---|---|---|---|
| (Note 2) Represented as "length W overlapped with the middle point on the left side / length W overlapped with the middle point on the right side". | | | | | | | | | |

As is clear from the results in Table 4, smaller warpage was observed in Example 1 in comparison with Reference Example 7. This is presumably because in Example 1 the spacer was disposed on a location axisymmetric with respect to a line that passes through the center of gravity of the honeycomb molded body and is perpendicular to the longitudinal direction.

### (Second Embodiment)

Hereinafter, the second embodiment, which is one embodiment of the present invention, will be described.
In the first embodiment, the positional relationship between the spacer and the honeycomb molded body is determined so that the spacer is overlapped with each of the two middle points; instead of the positional relationship, the positional relationship between the spacer and the honeycomb molded body is determined so that each of the middle points are not overlapped with the spacer, and each of the middle points is sandwiched between at least two spacers (a center side spacer and an end face side spacer) that are located on a side of the center of gravity of the honeycomb molded body and on a side of an end face, upon each of the middle points being used as reference standard.

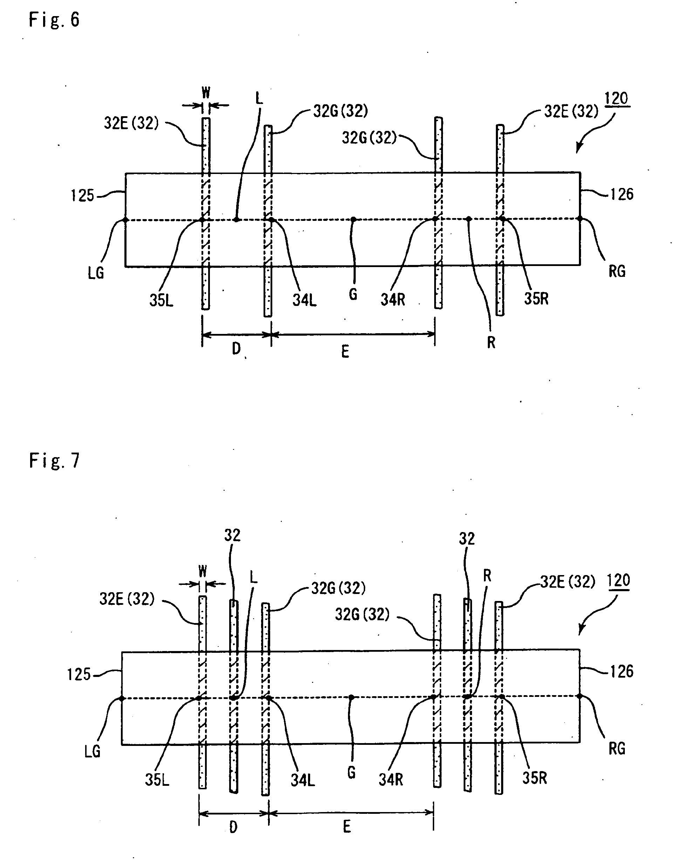

Fig. 6 is a plan view schematically showing a positional relationship between spacers and a honeycomb molded body in the second embodiment.
The spacer used in the present embodiment is the same as the spacer used in the first embodiment, and it is possible to preferably use the spacer having a width of 5 to 10 mm.

A honeycomb molded body 120 is placed on four spacers 32, as shown in Fig. 6.
And with respect to a left side middle point L, a center side spacer 32G exists on a side of the center of gravity G, and an end face side spacer 32E exists on a side of the center of gravity of a left side end face LG, and the left side middle point L is sandwiched between the two spacers 32.
In addition, also with respect to a right side middle point R, the center side spacer 32G exists on a side of the center of gravity G, and the end face side spacer 32E exists on a side of the center of gravity of a right side end face RG, and the right side middle point R is sandwiched between the two spacers 32.

In addition, in Fig. 6, given a location 35L on the end face side spacer 32E closest to the center of gravity of the left side end face LG and a location 34L on the center side spacer 32G closest to the center of gravity G, both of the locations being on a line that passes through the center of gravity of the left side end face LG and the center of gravity G of the honeycomb molded body, the distance between the location 35L and the location 34L is a distance indicated by D in Fig. 6.
In the present embodiment, each of the spacers 32 is positioned so that the distance D is set to 30 to 50 mm.
On a side of the right side end face as well, it is possible to specify a location 35R, a location 34R, and a distance D in the same manner. In the present embodiment, on the side of the left side end face as well, each of the spacers 32 is positioned so that the distance D is set to 30 to 50 mm.
In addition, each of the spacers is positioned so that the distance D is set to 9 to 16% of the longitudinal direction of the honeycomb molded body. The distance D is represented as a length (mm) or as a proportion (%) of the distance D to the length of the longitudinal direction of the honeycomb molded body.

In addition, in the present embodiment, a distance E between spacers is defined as a proportion (%) of the distance between the location 34L and the location 34R to the full length of the honeycomb molded body. In the present embodiment, each of the spacers 32 is positioned so that the distance E is set to 25 to 45%.
In addition, in the present embodiment, a length W refers to a length of the shorter side, that is, 5 to 10 mm.

In the present embodiment as well, it is possible to exert the effects (1) to (5), (9), and (10) described in the first embodiment. In addition, it is possible to exert the following effects.
(11) Since the distance D is set to 30 mm (9%) or more, it is possible to shorten a distance between a side of the spacers closest to the center of gravity of the honeycomb molded body and the center of gravity of the honeycomb molded body and a distance between a side of the spacers closest to each of the end faces of the honeycomb molded body and each of the end faces of the honeycomb molded body, it is possible to reduce the force to be applied to the vicinity of both the center of gravity and the end face of the honeycomb molded body.
Accordingly, it is possible to manufacture a honeycomb fired body with small warpage.

(12) Since the distance D is set to 50 mm (16%) or less, it is possible to shorten a distance between a side of the spacers closest to the middle point and the middle point. Accordingly, it is possible to reduce the force to be applied in the direction in which the vicinity of the middle point sandwiched between two spacers is to sink.
Accordingly, it is possible to manufacture a honeycomb fired body with small warpage.

(13) Since the length W of the spacer in the longitudinal direction is set to 10 mm or less, it is possible to markedly reduce the size of an area where the spacer contacts the honeycomb molded body. Accordingly, it is possible to manufacture a honeycomb fired body with higher strength and with the smooth surface of an area where the spacer has contacted the honeycomb molded body.

(14) In the case where the spacer is too thin, the honeycomb molded body is more likely to be misaligned upon placing the honeycomb molded body on the spacer in the firing jig. In the present embodiment, since the length in the longitudinal direction of the spacer is set to 5 mm or more, it is possible to prevent misalignment of the honeycomb molded body.

The following shows the Examples more specifically disclosing the second embodiment of the present invention. Moreover, the present invention is not limited only to these Examples.

### [Example 6]

In the degreasing treatment and the firing treatment, as shown in Fig. 6, four spacers made of carbon felt (shorter side 5 mm x longer side 410 mm x thickness 5 mm) were disposed, and a honeycomb molded body was placed on the spacers.
In the present Example, the spacers were disposed so that each of the middle points L and R were sandwiched between two spacers that were located on a side of the center of gravity and on a side of each of the end faces, of the honeycomb molded body, upon each of the middle points being used as reference standard, and so that the distance D was set to 50 mm. And a honeycomb fired body was manufactured in the same manner as in Example 1, except that the spacers were thus disposed.

The honeycomb fired bodies obtained in the Example were evaluated for warpage amount and fired state. Table 5 shows the results, as well as the results of Example 4.

[0113]

**[Table 5]**

| | Disposition of spacers | Spacers overlapp ed with middle point | Spacers sandwiching middle point | Spacers sandwiching center of gravity | Length W (mm) | Distance D (mm, %) | Distance E (%) | Length of molded body (mm) | Warpage (mm) | Fired state | |
|---|---|---|---|---|---|---|---|---|---|---|---|
| | | | | | | | | | | Bending strength | Appear |
| Example 6 | Fig. 6 | no | yes | yes | 5 | 50 mm, 15% | 34.8 | 330.2 | <= 0.5 | ++ | ++ |
| Example 4 | Fig. 4(a) | yes | no | yes | 50 | NA | 34.8 | 330.2 | <= 0.5 | ++ | + |

| | | | | | | | | | | | |
|---|---|---|---|---|---|---|---|---|---|---|---|
| NA = Not Available | | | | | | | | | | | |

As is clear from the results in Table 5, in Example 6, since spacers were disposed so that each of the two middle points L and R were sandwiched between two spacers, the obtained honeycomb fired body had small warpage.
In particular, since the distance D was set to 50 mm, the manufactured honeycomb fired body had very small warpage of 0.5 mm or less.

Here, the results of Example 6 are compared with the results of Example 4. The distance D was 50 mm in Example 6 while the length W was 50 mm in Example 4.
And the honeycomb molded body had a very small warpage of 0.5 mm or less in both of the Examples. This is presumably because in both of the Examples, the spacers were present on both sides of the two middle points, and a distance between a side of the spacers closest to the center of gravity of the honeycomb molded body and the center of gravity of the honeycomb molded body and a distance between a side of the spacers closest to each of the end faces of the honeycomb molded body and each of the end faces of the honeycomb molded body were made shorter.
However, appearance was more satisfactory in Example 6. This is presumably because firing was carried out more sufficiently in Example 6 since an area where the spacers contacted the honeycomb molded body was smaller in Example 6 than that in Example 4.

### (Examples 7 and 8, Reference Examples 8 and 9)

A honeycomb fired body was manufactured in the same manner as in Example 6, except that in the degreasing treatment and the firing treatment, the location of the spacer was changed, and that the spacers were disposed, as shown in Table 6, so that the distance D was set to 20 to 60 mm (6 to 18%) and the distance E was set to 43.9 to 31.8%.

The honeycomb fired bodies obtained in the respective Examples and Reference Examples were evaluated for warpage amount and fired state. Table 6 shows the results, as well as the results of Example 6.

**[Table 6]**

| | Disposition of spacers | Spacers sandwiching middle point | Spacers sandwiching center of gravity | Length W (mm) | Distance D (mm, %) | Distance E (%) | Length of molded body (mm) | Warpage (mm) | Fired state | |
|---|---|---|---|---|---|---|---|---|---|---|
| | | | | | | | | | Bending strength | Appearance |
| Reference Example 8 | Fig. 6 | yes | yes | 5 | 20 mm, 6% | 43.9 | 330.2 | 0.5 to 0.8 | ++ | +++ |
| Example 7 | Fig. 6 | yes | yes | 5 | 30 mm, 9% | 40.9 | 330.2 | <= 0.5 | ++ | +++ |
| Example 8 | Fig. 6 | yes | yes | 5 | 40 mm, 12% | 37.9 | 330.2 | <= 0.5 | ++ | +++ |
| Example 6 | Fig. 6 | yes | yes | 5 | 50 mm, 15% | 34.8 | 330.2 | <= 0.5 | ++ | +++ |
| Reference Example 9 | Fig. 6 | yes | yes | 5 | 60 mm, 18% | 31.8 | 330.2 | 0.5 to 0.8 | ++ | +++ |

As is clear from the results in Table 6, in the case where the distance D was set in the range of 30 to 50 mm (9 to 15%), the manufactured honeycomb fired body had a small warpage of 0.5 mm or less.

### (Example 9, Reference Examples 10 and 11)

A honeycomb fired body was manufactured in the same manner as in Example 6, except that in the degreasing treatment and the firing treatment, the spacers were disposed so that the length of the shorter side was set to 3 to 12 mm and the length W was set to the length shown in Table 7 (3 to 12 mm) . In this case, the spacers were disposed so that the distance D was set to 50 mm (15%) and the distance E was set to 34.8%.

The honeycomb fired bodies obtained in the Example and each of the Reference Examples were evaluated for warpage amount and fired state. Table 7 shows the results, as well as the results of Example 6.

**[Table 7]**

| | Disposition of spacers | Spacers sandwiching middle point | Spacers sandwiching center of gravity | Length W (mm) | Distance D (mm, %) | Distance E (%) | Length of molded body (mm) | Warpage (mm) | Fired state | |
|---|---|---|---|---|---|---|---|---|---|---|
| | | | | | | | | | Bending strength | Appearanc |
| Reference Example 10 | Fig. 6 | yes | yes | 3 | 50 mm, 15% | 34.8 | 330.2 | <= 0.5 | + | +++ |
| Example 6 | Fig. 6 | yes | yes | 5 | 50 mm, 15% | 34.8 | 330.2 | <= 0.5 | ++ | +++ |
| Example 9 | Fig. 6 | yes | yes | 10 | 50 mm, 15% | 34.8 | 330.2 | <= 0.5 | ++ | +++ |
| Reference Example 11 | Fig. 6 | yes | yes | 12 | 50 mm, 15% | 34.8 | 330.2 | <= 0.5 | ++ | ++ |

As is clear from the results in Table 7, in the case where the length w was set in the range of 5 to 10 mm, the manufactured honeycomb fired body had a small warpage of 0.5 mm or less, higher bending strength, and very satisfactory appearance. This is presumably because an area where the spacer contacted the honeycomb molded body was so small that firing was carried out sufficiently. In addition, this is presumably because the spacer does not bite into the honeycomb molded body.

### (Third Embodiment)

Hereinafter, the third embodiment, which is one embodiment of the present invention, will be described.
In the present embodiment, in addition to the above-mentioned spacers disposed in the second embodiment, spacers are disposed also on locations where the spacers are overlapped with each of the two middle points.

Fig. 7 is a plan view schematically showing a positional relationship between spacers and a honeycomb molded body in the third embodiment.
The honeycomb molded body 120 is not placed on six spacers 32, as shown in Fig. 7.
And since a center side spacer 32G is present on a side of the center of gravity G and an end face side spacer 32E is present on a side of the center of gravity of a left side end face LG, upon a left side middle point L as well being reference standard, the left side middle point L is sandwiched between the two spacers 32.
Furthermore, a spacer 32 is present also on a location overlapped with the left side middle point L.
In addition, a center side spacer 32G is present on a side of the center of gravity G and an end face side spacer 32E is present on a side of the center of gravity of the right side end face RG, upon a right side middle point R being reference standard, and furthermore, a spacer 32 is present also on a location overlapped with the right side middle point R

In the present embodiment as well, it is possible to exert the effects (1) to (5), and (9) described in the first embodiment and the effects (11) to (14) described in the second embodiment.

The following shows the Examples more specifically disclosing the third embodiment of the present invention. Moreover, the present invention is not limited only to these Examples.

### (Example 10)

In the degreasing treatment and the firing treatment, as shown in Fig. 7, six spacers made of carbon felt (shorter side 5 mm x longer side 410 mm x thickness 5 mm) were disposed, and a honeycomb molded body was placed on the spacers.
In the present Example, spacers were disposed so that each of the middle points L and R is sandwiched between two spacers 32 (a center side spacer and an end face side spacer) that were located on a side of the center of gravity and on a side of each of the end faces, of the honeycomb molded body, upon each of the middle points being used as reference standard, and each of the middle points L and R is overlapped with the spacer 32.
In addition, the spacers were disposed in this case so that the distance D was set to 50 mm (15%) and the distance E was set to 34.8%. A honeycomb fired body was manufactured in the same manner as in Example 1, except that the spacers were thus disposed.

The honeycomb fired bodies obtained in the Example were evaluated for warpage amount and fired state. Table 8 shows the results, as well as the results of Examples 4 and 6.

**[Table 8]**

| | Disposition of spacers | Spacers overlapped with middle point | Spacers sandwiching middle point | Spacers sandwiching center of gravity | Length W (mm) | Distance D (mm, %) | Distance E (%) | Length of molded body (mm) | Warpage (mm) | Fired state | |
|---|---|---|---|---|---|---|---|---|---|---|---|
| | | | | | | | | | | Bending strength | Appear |
| Example 10 | Fig. 7 | yes | yes | yes | 5 | 50 mm, 15% | 34.8 | 330.2 | <= 0.5 | ++ | ++ |
| Example 6 | Fig. 6 | no | yes | yes | 5 | 50 mm, 15% | 34.8 | 330.2 | <= 0.5 | ++ | ++ |
| Example 4 | Fig. 4(a) | yes | no | yes | 50 | NA | 34.8 | 330.2 | <= 0.5 | ++ | + |

| | | | | | | | | | | | |
|---|---|---|---|---|---|---|---|---|---|---|---|
| NA = Not Available | | | | | | | | | | | |

As is clear from the results in Table 8, in Example 10, since a firing treatment was carried out with spacers disposed so that each of the two middle points was sandwiched between two spacers and each of the two middle points is overlapped with the spacers, the obtained honeycomb fired body had small warpage.
In particular, since the distance D was set to 50 mm (15%) the honeycomb molded body had a very small warpage of 0.5 mm or less.
The results of Example 10 were approximately the same as the results of Example 6, and appearance in Example 10 were more satisfactory than that in Example 4. This is presumably because firing was carried out more sufficiently in Example 10 as well since an area where the spacer contacted the honeycomb molded body is smaller in Example 10 than that in Example 4.

### (Other Embodiments)

Hereinafter, spacers that can be used in the respective embodiments will be described in more detail.
The material of the spacers is not particularly limited as long as the material can bear high temperature during firing, and thus it is possible to preferably use the ceramic member having heat resistance.
In addition, when a space is formed between a firing jig and a honeycomb molded body by using spacers, since heat is transferred to the honeycomb molded body mainly through spacers present under the honeycomb molded body, the spacers desirably have high thermal conductivity in order to rapidly progress the sintering of the honeycomb molded body.
For this reason, examples of the ceramic member include carbon, silicon carbide, aluminum nitride, silicon nitride, and the like.
Moreover, various changes may be made in the ceramic member to be used as a spacer, based on the material forming the honeycomb molded body to be fired.

Out of these, carbon felt formed by combining carbon fibers into a cloth-like shape, and a ceramic member formed by weaving linear carbon fibers are preferable. This is because since these are not too solid, it is less likely to damage the honeycomb molded body.

In addition, a bulk density of the carbon felt is desirably 0.3 g/cm³ or less, and more desirably 0.1 g/cm³ or less. This is because when the bulk density is within the range, the honeycomb molded body is not damaged, a contact area between the honeycomb molded body and the carbon felt is small, and furthermore since an SiO gas generated from the honeycomb molded body passes through the carbon felt, coarse particles made of silicon carbide are less likely to be formed due to the reaction between the honeycomb molded body and the carbon felt.

A thickness of the spacer is desirably 1.0 mm or more upon consideration of a space between the firing jig and the honeycomb molded body to be provided, and desirably 10. 0 mm or less upon consideration of thermal conduction to the honeycomb molded body.
In addition, a specific shape of the spacer is not particularly limited, and a square pillar shape is desirable in terms of stability upon placement of the honeycomb molded body.

The honeycomb structured body to be manufactured in the present embodiment is not limited to a honeycomb structured body with the cells being sealed. A honeycomb structured body with the cells being sealed can be preferably used as a honeycomb filter; whereas a honeycomb structured body with the cells not being sealed can be preferably used as a catalyst supporting carrier.
Accordingly, in the method for manufacturing a honeycomb structured body of the present embodiment, it is not always necessary to inject a plug material paste, but as needed.

The main component of the constituent material of the honeycomb structured body is not limited to silicon carbide, and other examples of ceramic materials include inorganic powder such as nitride ceramics such as aluminum nitride, silicon nitride, boron nitride, titanium nitride; carbide ceramics such as zirconium carbide, titanium carbide, tantalum carbide, tungsten carbide; and oxide ceramics such as alumina, zirconia, cordierite, mullite, and aluminum titanate, and the like.
Out of these components, non-oxide ceramics are preferable, and silicon carbide is more preferable because these are excellent in thermal resistance properties, mechanical strength, and thermal conductivity. Moreover, examples of the constituent material of the honeycomb structured body also include silicon-containing ceramic, in which metallic silicon is blended with the ceramics set forth above, as well as a ceramic material such as ceramic bound by silicon or silicate compounds. And out of these, those ceramics (silicon-containing silicon carbide) in which metallic silicon is blended with silicon carbide are preferably used.

The particle diameter of the silicon carbide powder is not particularly limited, and the silicon carbide powder that tends not to cause the case where the size of the honeycomb structured body manufactured by the following firing treatment becomes smaller than that of the honeycomb molded body after degreased is preferable. A powder having a combination of 100 parts by weight of powder having an average particle diameter of 1.0 to 50 µm, and 5 to 65 parts by weight of powder having an average particle diameter of 0.1 to 1.0 µm is preferable.
In order to adjust the pore diameter and the like of the honeycomb fired body, it is necessary to adjust the firing temperature. However, it is also possible to adjust the pore diameter by adjusting the particle diameter of the inorganic powder.

The organic binder in the wet mixture is not particularly limited, and examples thereof include methylcellulose, carboxy methylcellulose, hydroxy ethylcellulose, polyethylene glycol, and the like. Methylcellulose is desirable among these. A blending amount of the organic binder is desirably 1 to 10 parts by weight with respect to 100 parts by weight of inorganic powder.
The plasticizer in the wet mixture is not particularly limited, and examples thereof include glycerin and the like.
The lubricant is not particularly limited, and examples thereof include polyoxyalkylene-based compounds such as polyoxyethylene alkyl ether and polyoxypropylene alkyl ether, and the like. Specific examples of the lubricant include polyoxyethylene monobutyl ether, polyoxypropylene monobutyl ether, and the like.
Moreover, the plasticizer and the lubricant may not be contained in the mixed raw material powder in some cases.

In addition, a dispersant solution may be used upon preparing a wet mixture, and examples of the dispersant solution include water, an organic solvent such as benzene, alcohol such as methanol, and the like.
Furthermore, a molding aid may be added to the wet mixture.
The molding aid is not particularly limited, and examples thereof include ethylene glycol, dextrin, fatty acid, fatty acid soap, polyalcohol, and the like.

Furthermore, a pore-forming agent such as balloons that are fine hollow spheres including oxide-based ceramics, spherical acrylic particles, and graphite may be added to the wet mixture, if necessary.
The balloon is not particularly limited, and examples thereof include alumina balloon, glass micro balloon, shirasu balloon, fly ash balloon (FA balloon), mullite balloon and the like. Alumina balloon is desirable among these.

In addition, a wet mixture prepared here, in which silicon carbide powder is used, desirably has a temperature of 28°C or less. The reason for this is that when the temperature is too high, an organic binder may gel.
A proportion of organic component in the wet mixture is desirably 10% by weight or less, and a content of water in the wet mixture is desirably 8 to 20% by weight.

The plug material paste for sealing the cells is not particularly limited, a plug to be manufactured through the subsequent processes desirably has a porosity of 30 to 75%, and for example, it is possible to use a plug material paste having the same composition as that of the wet mixture.

In addition, when the aggregate of honeycomb fired bodies is manufactured, the gaps between the honeycomb fired bodies may be collectively filled in with the sealing material paste after a necessary number of honeycomb fired bodies are assembled together through the spacer.

Examples of the inorganic binder in the sealing material paste include silica sol, alumina sol, and the like. Each of these materials may be used alone, or two or more kinds of these may be used in combination. Silica sol is desirable among the inorganic binders.

Examples of the organic binder in the sealing material paste include polyvinyl alcohol, methyl cellulose, ethyl cellulose, carboxymethyl cellulose, and the like. Each of these may be used alone or two or more kinds of these may be used in combination. Carboxymethyl cellulose is desirable among the organic binders.

Examples of the inorganic fibers in the sealing material paste include ceramic fibers and the like such as silica-alumina, mullite, alumina, and silica. Each of these may be used alone or two or more kinds of these may be used in combination. Alumina fibers are desirable among the inorganic fibers.

Examples of the inorganic particles in the sealing material paste include carbides, nitrides, and the like, and specific examples thereof include inorganic powder or the like made from silicon carbide, silicon nitride and boron nitride. Each of these may be used alone, or two or more kinds of these may be used in combination. Out of the inorganic particles, silicon carbide is desirably used due to its superior thermal conductivity.

Moreover, a pore-forming agent such as balloons that are fine hollow spheres comprising oxide-based ceramics, spherical acrylic particles, and graphite may be added to the sealing material paste, if necessary.
The balloons are not particularly limited, and examples thereof include alumina balloons, glass micro-balloons, shirasu balloons, fly ash balloons (FA balloons), mullite balloons, and the like. Alumina balloons are more desirably used among these.

Hereinafter, preferable embodiments of the respective processes in the respective embodiments will be described in more detail.
After manufacturing a honeycomb molded body through extrusion-molding, it is not always necessary to carry out a drying treatment, but as needed. In addition, the drying treatment may be performed after filling ends of cells with a plug material paste.
In addition, when the drying treatment is carried out on the honeycomb molded body, a microwave drying apparatus, a hot air drying apparatus, a reduced pressure drying apparatus, a dielectric drying apparatus, a freeze drying apparatus, or the like, in addition to a drying apparatus combining microwave and hot air, may be used.

In addition, it is not always necessary to conduct the process of filling ends of cells of the honeycomb molded body with a plug material paste, but the process may be omitted. When the process of injecting the plug material paste is omitted, the honeycomb structured body thus completed can be suitably used as a catalyst supporting carrier for supporting a catalyst.

Moreover, it is not always necessary to perform a degreasing treatment and a firing treatment using the same firing jig, and a firing jig different from a firing jig used during the firing treatment may be used during the degreasing treatment. In this case, it is possible to perform the firing treatment by removing the degreased honeycomb molded body form a firing jig and placing the honeycomb molded body on spacers disposed on the firing jig.

A catalyst may be supported on the honeycomb structured body manufactured in the present invention if necessary. In addition, a catalyst may be supported on a honeycomb fired body before manufacturing a honeycomb aggregated body.
In the case where a catalyst is supported, desirably, an alumina film (layer) having a high specific surface area is formed on the surface of the honeycomb structured body, and a co-catalyst, and a catalyst such as platinum are applied onto the surface of the alumina film.

Examples of the method for forming the alumina film on the surface of the honeycomb structured body include: a method in which the honeycomb structured body is impregnated with a solution of a metal compound containing aluminum such as Al(NO₃)₃ and then heated; a method in which the honeycomb structured body is impregnated with a solution containing alumina powder and then heated; and the like. Examples of the method for applying a co-catalyst include a method in which the honeycomb structured body is impregnated with a solution of a metal compound containing a rare-earth element such as Ce (NO₃) and then heated, and the like. Examples of the method for applying a catalyst to the alumina film include a method in which the honeycomb structured body is impregnated with a solution of diamine dinitro platinum nitric acid ([Pt (NH₃)₂(NO₂)₂]HNO₃, platinum concentration: about 4.53% by weight) and the like and then heated, and the like.
In addition, a catalyst may be applied by a method in which, after preceding application of a catalyst to alumina particles, the honeycomb structured body is impregnated with a solution containing alumina powder with the catalyst applied thereto, and then heated.

### BRIEF DESCRIPTION OF THE DRAWINGS

Fig. 1 is a perspective view schematically showing one example of a honeycomb structured body.
Fig. 2(a) is a perspective view schematically showing honeycomb fired body forming the honeycomb structured body shown in Fig. 1, and Fig. 2(b) is a cross-sectional view taken along line A-A of Fig. 2(a).
Fig. 3(a) is a partially cut-out perspective view schematically showing a method for placing honeycomb molded bodies in a firing jig in the first embodiment of the present invention, and Fig. 3(b) is a plan view of a portion shown by B in Fig. 3(a).
Figs. 4(a) and 4(b) is a plan view schematically each showing a positional relationship between spacers and a honeycomb molded body in the respective Examples.
Figs. 5(a), 5(b), 5(c), and 5(d) are plan views schematically each showing a positional relationship between a honeycomb molded body and spacers in the respective Comparative Examples.
Fig. 6 is a plan view schematically showing a positional relationship between spacers and a honeycomb molded body in the second embodiment.
Fig. 7 is a plan view schematically showing a positional relationship between spacers and a honeycomb molded body in the third embodiment.
Fig. 8 is a cross-sectional view schematically showing a method for disposing spacers on a surface of a firing jig, placing a honeycomb molded body on the spacers, and carrying out a firing treatment thereon.
Fig. 9 is a cross-sectional view schematically showing a way in which the vicinity of a center of gravity of a honeycomb molded body placed on spacers sinks and warps.
Fig. 10 is a partially cut-out perspective view schematically showing one example of a method for disposing spacers just under centers of gravity of each of honeycomb molded bodies in a firing treatment and placing the honeycomb molded bodies in a firing jig.
Fig. 11 is a cross-sectional view schematically showing a way in which the vicinity of a center of gravity of a honeycomb molded body placed on spacers is lifted up and warps.

### EXPLANATION OF SYMBOLS

10 Firing jig
11 Bottom plate
12, 22, 32 Spacer
14L, 34L Location closest to a center of gravity (left)
14R, 34R Location closest to a center of gravity (right)
15L, 35L Location closest to a center of gravity of an end face (left)
15R, 35R Location closest to a center of gravity of an end face (right)
32E End face side spacer
32G Center side spacer
100 Honeycomb structured body
101 Adhesive layer
110 Honeycomb fired body
111 Cell
113 Cell wall
120 Honeycomb molded body
125 Left side end face (end face)
126 Right side end face (end face)
G Center of gravity of a honeycomb molded body
L Left side middle point (middle point between a center of gravity and a center of gravity of an end face)
R Right side middle point (middle point between a center of gravity and a center of gravity of an end face)
LG Center of gravity of a left side end face
RG Center of gravity of a right side end face

## Claims

1. A method for manufacturing a honeycomb structured body (100) comprising the steps of:
manufacturing a pillar-shaped honeycomb molded body (120) having a large number of cells disposed in parallel with one another in a longitudinal direction with a cell wall therebetween;
carrying out a firing treatment on said honeycomb molded body (120) with said honeycomb molded body (120) being placed on a spacer (12) disposed on a bottom plate (11) of a firing jig (10) to manufacture a honeycomb fired body (110); and
bonding a plurality of said honeycomb fired bodies (110) together by interposing an adhesive layer (101) to manufacture a honeycomb aggregated body,
in said firing treatment, when said honeycomb molded body (120) placed on said spacer (12) is viewed in a plan view,
said spacer (12) being disposed on at least two locations so that a center of gravity (G) of said honeycomb molded body (120) is sandwiched in said longitudinal direction,
said spacer (12) being disposed with respect to each of middle points (L, R) between said center of gravity (G) of the honeycomb molded body (129) and centers of gravity (LG, RG) of each of end faces (125, 126) of the honeycomb molded body (120) so as to include both an area on a side of said center of gravity (G) and an area on a side of each of said end faces (125, 126), of the honeycomb molded body (120), upon each of the middle points (L, R) being used as reference standard, and
each of said end faces (125, 126) being an end face in a longitudinal direction of said honeycomb molded body (120),
**characterized in that**
in said firing treatment, when said honeycomb molded body (120) placed on said spacer (12, 32) is viewed in a plan view, said spacers (12, 32) are disposed so that each of said middle points (L, R) is sandwiched between at least two spacers (12, 32) where a center side spacer (32G) is disposed in an area on a side of the center of gravity (G) of said honeycomb molded body (120) and an end face side spacer (32E) is disposed in an area on a side of an end face (125, 126) of said honeycomb molded body (120), upon each of the middle points (L, R) being used as reference standard, and
a distance between a location (15L, 35L, 15R, 35R) closest to the center of gravity (LG, RG) of said end face (125, 126) of said end face side spacer (32E) and a location (14L, 34L, 14R, 34R) closest to said center of gravity (G) of said center side spacer (32G) is 9 to 16% of a length in a longitudinal direction of said honeycomb fired body (110).

2. The method for manufacturing a honeycomb structured body (100) according to claim 1,
wherein
a distance between a location (15L, 35L, 15R, 35R) closest to the center of gravity (LG, RG) of said end face (125, 126) of said end face side spacer (32E) and a location (14L, 34L, 14R, 34R) closest to said center of gravity (G) of said center side spacer (32G) is 30 to 50 mm.

3. The method for manufacturing a honeycomb structured body (100) according to claim 1 or 2,
wherein
lengths in said longitudinal direction of said end face side spacer (32E) and said center side spacer (32G) are 5 to 10 mm.

4. The method for manufacturing a honeycomb structured body (100) according to any of claims 1 to 3,
wherein
in said firing treatment, when said honeycomb molded body (120) placed on said spacer (12, 32) is viewed in a plan view, said spacer (12, 32) is disposed on a location axisymmetric with respect to a line, said line passing through a center of gravity (G) of said honeycomb molded body (120) and being perpendicular to said longitudinal direction.

5. The method for manufacturing a honeycomb structured body (100) according to any of claims 1 to 4,
wherein
a length in a longitudinal direction of said honeycomb molded body (120) is 305 mm or more.

6. The method for manufacturing a honeycomb structured body (100) according to any of claims 1 to 5,
wherein
said pillar-shaped honeycomb molded body (120) is manufactured by molding a raw material composition including at least silicon carbide powder and a binder.

7. The method for manufacturing a honeycomb structured body (100) according to any of claims 1 to 6,
wherein
said spacer (12) comprises carbon felt.

8. The method for manufacturing a honeycomb structured body (100) according to any of claims 1 to 7,
wherein
said firing jig (10) has a box shape with its upper surface open, and the box shape is made of a rectangular plate-shaped bottom plate (11) and a side wall member (13) vertically installed on four sides of the bottom plate (11).

9. The method for manufacturing a honeycomb structured body (100) according to any of claims 1 to 8,
wherein
said firing jig (10) comprises carbon.

## Patentansprüche

1. Verfahren zum Herstellen eines strukturierten Wabenkörpers (100) mit den Schritten des:
Herstellens eines geformten säulenförmigen Wabenkörpers (120) mit einer großen Anzahl an Zellen, die parallel zueinander in einer Längsrichtung mit einer Zellwand dazwischen vorgesehen sind,
Ausführens einer Brennbehandlung auf dem geformten Wabenkörper (120), wobei der geformte Wabenkörper (120) auf einem Abstandshalter (12) platziert ist, der auf einer Grundplatte (11) eines Brenngestells (10) vorgesehen ist, um einen gebrannten Wabenkörper (110) herzustellen, und
Verbindens mehrerer gebrannter Wabenkörper (110) durch Einfügen einer Klebeschicht (101), um einen zusammengesetzten Wabenkörper herzustellen,
wobei bei der Brennbehandlung, wenn der geformte Wabenkörper (120), der auf dem Abstandshalter (12) platziert ist, in einer Draufsicht betrachtet wird,
der Abstandshalter (12) an wenigstens zwei Orten so vorgesehen ist, dass ein Schwerpunkt (G) des geformten Wabenkörpers (120) in der Längsrichtung eingebettet ist,
der Abstandshalter (12) bezüglich jedem der mittleren Punkte (L, R) zwischen dem Schwerpunkt (G) des geformten Wabenkörpers (129) und den Schwerpunkten (LG, RG) jeder Endfläche (125, 126) des geformten Wabenkörpers (120) so vorgesehen ist, dass er sowohl eine Fläche auf einer Seite des Schwerpunkts (G) als auch eine Fläche auf einer Seite von jeder der Endflächen (125, 126) des geformten Wabenkörpers (120) einschließt, wobei jeder der mittleren Punkte (L, R) als Referenzstandard verwendet wird und
wobei jede der Endflächen (125, 126) eine Endfläche in einer Längsrichtung des geformten Wabenkörpers (120) ist,
**dadurch gekennzeichnet, dass**
bei der Brennbehandlung, wenn der geformte Wabenkörper (120), der auf dem Abstandshalter (12, 32) angeordnet ist, in einer Draufsicht betrachtet wird, die Abstandshalter (12, 32) so vorgesehen sind, dass jeder der mittleren Punkte (L, R) zwischen wenigstens zwei Abstandshaltern (12, 32) eingefügt ist, wobei ein Abstandshalter (32G) auf der Zentrumsseite in einer Fläche auf einer Seite des Schwerpunkts (G) des geformten Wabenkörpers (120) vorgesehen ist, und ein Abstandshalter (32E) auf einer Endflächenseite in einer Fläche auf einer Seite einer Endfläche (125, 126) des geformten Wabenkörpers (120) vorgesehen ist, wobei jeder der mittleren Punkte (L, R) als Referenzstandard verwendet wird und
ein Abstand zwischen einem Ort (15L, 35L, 15R, 35R) am nächsten zu dem Schwerpunkt (LG, RG) der Endfläche (125, 126) des Abstandshalters (32E) auf der Endflächenseite und einem Ort (14L, 34L, 14R, 34R) am nächsten zu dem Schwerpunkt (G) des Abstandshalters (32G) auf der Zentrumsseite im Bereich von 9 bis 16% einer Länge in einer Längsrichtung des gebrannten Wabenkörpers (110) liegt.

2. Verfahren zum Herstellen eines strukturierten Wabenkörpers (100) nach Anspruch 1,
bei dem
ein Abstand zwischen einem Ort (15L, 35L, 15R, 35R) am nächsten zu dem Schwerpunkt (LG, RG) der Endfläche (125, 126) des Abstandshalters (32E) an der Endflächenseite und einem Ort (14L, 34L, 14R, 34L) am nächsten zu dem Schwerpunkt (G) des Abstandshalters (32G) auf der Zentrumsseite im Bereich von 30 bis 50 mm liegt.

3. Verfahren zum Herstellen eines strukturierten Wabenkörpers (100) nach Anspruch 1 oder 2,
bei dem
die Längen in der Längsrichtung des Abstandshalters auf der Endflächenseite (32E) und des Abstandshalters (32G) auf der Zentrumsseite im Bereich von 5 bis 10 mm liegen.

4. Verfahren zum Herstellen eines strukturierten Wabenkörpers (100) nach einem der Ansprüche 1 bis 3,
bei dem
bei der Brennbehandlung, wenn der geformte Wabenkörper (120), der auf dem Abstandshalter (12, 32) angeordnet ist, in einer Draufsicht betrachtet wird, der Abstandshalter (12, 32) an einem Ort vorgesehen ist, der bezüglich einer Linie axialsymmetrisch ist, wobei die Linie durch einen Schwerpunkt (G) des geformten Wabenkörpers (120) hindurchtritt und senkrecht zu der Längsrichtung ist.

5. Verfahren zum Herstellen eines strukturierten Wabenkörpers (100) nach einem der Ansprüche 1 bis 4,
bei dem
eine Länge in einer Längsrichtung des geformten Wabenkörpers (120) 305 mm oder mehr ist.

6. Verfahren zum Herstellen eines strukturierten Wabenkörpers (100) nach einem der Ansprüche 1 bis 5,
bei dem
der säulenförmige geformte Wabenkörper (120) durch Formen einer Rohmaterialzusammensetzung mit wenigstens Siliziumcarbidpulver und einem Bindemittel hergestellt ist.

7. Verfahren zum Herstellen eines strukturierten Wabenkörpers (100) nach einem der Ansprüche 1 bis 6,
bei dem
der Abstandshalter (12) Kohlenstoff-Filz aufweist.

8. Verfahren zum Herstellen eines strukturierten Wabenkörpers (100) nach einem der Ansprüche 1 bis 7,
bei dem
das Brenngestell (10) eine Kastenform mit offener Oberfläche aufweist, und die Kastenform aus einer rechteckigen plattenförmigen Grundplatte (11) und einem Seitenwandelement (13) hergestellt ist, das an vier Seiten der Grundplatte (11) vertikal vorgesehen ist.

9. Verfahren zum Herstellen eines strukturierten Wabenkörpers (100) nach einem der Ansprüche 1 bis 8,
bei dem
das Brenngestell (10) Kohle aufweist.

## Revendications

1. Procédé destiné à fabriquer un corps structuré en nid d'abeilles (100) comprenant les étapes consistant :
à fabriquer un corps moulé en nid d'abeilles en forme de pilier (120) ayant un grand nombre de cellules disposées en parallèle les unes aux autres dans une direction longitudinale avec une paroi cellulaire entre elles ;
à effectuer un traitement de cuisson sur ledit corps moulé en nid d'abeilles (120) avec ledit corps moulé en nid d'abeilles (120) étant placé sur une entretoise (12) disposée sur une plaque inférieure (11) d'un gabarit de cuisson (10) pour fabriquer un corps cuit en nid d'abeilles (110) ; et
à lier une pluralité desdits corps cuits en nid d'abeilles (110) entre eux en interposant une couche adhésive (101) pour fabriquer un corps agrégé en nid d'abeilles,
dans ledit traitement de cuisson, lorsque ledit corps moulé en nid d'abeilles (120) placé sur ladite entretoise (12) est visionné dans une vue en plan,
ladite entretoise (12) étant disposée sur au moins deux emplacements de sorte que le centre de gravité (G) dudit corps moulé en nid d'abeilles (120) soit coincé dans ladite direction longitudinale,
ladite entretoise (12) étant disposée par rapport à chacun des centres (L, R) entre ledit centre de gravité (G) du corps moulé en nid d'abeilles (129) et les centres de gravité (LG, RG) de chacune des faces extrêmes (125, 126) du corps moulé en nid d'abeilles (120) afin d'inclure à la fois une zone sur un côté dudit centre de gravité (G) et une zone sur un côté de chacune desdites faces extrêmes (125, 126), du corps moulé en nid d'abeilles (120), sur chacun des centres (L, R) étant utilisés en tant qu'étalon de référence, et
chacune desdites faces extrêmes (125, 126) étant une face extrême dans une direction longitudinale dudit corps moulé en nid d'abeilles (120),
**caractérisé en ce que**
dans ledit traitement de cuisson, lorsque ledit corps moulé en nid d'abeilles (120) placé sur ladite entretoise (12, 32) est visionné dans une vue en plan, lesdites entretoises (12, 32) sont disposées de sorte que chacun desdits centres (L, R) soit coincé entre au moins deux entretoises (12, 32) où une entretoise latérale centrale (32G) est disposée dans une zone sur un côté du centre de gravité (G) dudit corps moulé en nid d'abeilles (120) et une entretoise latérale de face extrême (32E) est disposée dans une zone sur un côté d'une face extrême (125, 126) dudit corps moulé en nid d'abeilles (120), sur chacun des centres (L, R) étant utilisés en tant qu'étalon de référence, et
une distance entre l'emplacement (15L, 35L, 15R, 35R) le plus proche du centre de gravité (LG, RG) de ladite face extrême (125, 126) de ladite entretoise latérale de face extrême (32E) et l'emplacement (14L, 34L, 14R, 34R) le plus proche dudit centre de gravité (G) de ladite entretoise latérale centrale (32G) est de 9 à 16% de longueur dans une direction longitudinale dudit corps cuit en nid d'abeilles (110).

2. Procédé destiné à fabriquer un corps structuré en nid d'abeilles (100) selon la revendication 1,
dans lequel
une distance entre l'emplacement (15L, 35L, 15R, 35R) le plus proche du centre de gravité (LG, RG) de ladite face extrême (125, 126) de ladite entretoise latérale de face extrême (32E) et l'emplacement (14L, 34L, 14R, 34R) le plus proche dudit centre de gravité (G) de ladite entretoise latérale centrale (32G) est de 30 à 50 mm.

3. Procédé destiné à fabriquer un corps structuré en nid d'abeilles (100) selon la revendication 1 ou 2,
dans lequel
les longueurs dans ladite direction longitudinale de ladite entretoise latérale de face extrême (32E) et ladite entretoise latérale centrale (32G) sont de 5 à 10 mm.

4. Procédé destiné à fabriquer un corps structuré en nid d'abeilles (100) selon l'une des revendications 1 à 3,
dans lequel
dans ledit traitement de cuisson, lorsque ledit corps moulé en nid d'abeilles (120) placé sur ladite entretoise (12, 32) est visionné dans une vue en plan, ladite entretoise (12, 32) est disposée sur un emplacement axisymétrique par rapport à une ligne, ladite ligne passant à travers le centre de gravité (G) dudit corps moulé en nid d'abeilles (120) et étant perpendiculaire à ladite direction longitudinale.

5. Procédé destiné à fabriquer un corps structuré en nid d'abeilles (100) selon l'une des revendications 1 à 4,
dans lequel
une longueur dans une direction longitudinale dudit corps moulé en nid d'abeilles (120) est de 305 mm ou plus.

6. Procédé destiné à fabriquer un corps structuré en nid d'abeilles (100) selon l'une des revendications 1 à 5,
dans lequel
ledit corps moulé en nid d'abeilles en forme de pilier (120) est fabriqué par moulage d'une composition de matières premières comportant au moins une poudre de carbure de silicium et un liant.

7. Procédé destiné à fabriquer un corps structuré en nid d'abeilles (100) selon l'une des revendications 1 à 6,
dans lequel
ladite entretoise (12) comprend le feutre de carbone.

8. Procédé destiné à fabriquer un corps structuré en nid d'abeilles (100) selon l'une des revendications 1 à 7,
dans lequel
ledit gabarit de cuisson (10) présente une forme de boîte avec sa surface supérieure ouverte, et la forme de boîte est réalisée en une plaque inférieure (11) en forme de plaque rectangulaire et un élément de paroi latérale (13) installé verticalement sur les quatre côtés de la plaque inférieure (11).

9. Procédé destiné à fabriquer un corps structuré en nid d'abeilles (100) selon l'une des revendications 1 à 8,
dans lequel
ledit gabarit de cuisson (10) comprend le carbone.
